# EUROPEAN PATENT SPECIFICATION

(11) **EP 0 557 740 B1**
(45) Date of publication and mention of the grant of the patent: **28.05.1997**
(21) Application number: 93101512.7
(22) Date of filing: 01.02.1993
(51) Int. Cl.: C01B 33/148, C01B 33/143

(54) **Method of preparing high-purity aqueous silica sol**
Verfahren zur Herstellung eines wässrigen Kieselsäuresols hoher Reinheit
Procédé de préparation d'un sol aqueux de silice de haute pureté

(30) Priority: 27.02.1992 US 842423
(43) Date of publication of application: 01.09.1993
(73) Proprietor: NISSAN CHEMICAL INDUSTRIES LTD., Chiyoda-ku Tokyo (JP)
(72) Inventor: Watanabe, Yoshitane, c/o Nissan Chemical Ind., Ltd, Funabashi-shi, Chiba-ken (JP); Ando, Mikio, c/o Nissan Chemical Industries, Ltd., Sodegaura-shi, Chiba-ken (JP); Yogo, Isao, c/o Nissan Chemical Industries, Ltd., Sodegaura-shi, Chiba-ken (JP)
(74) Representative: Hansen, Bernd, Dr. Dipl.-Chem.

(56) References cited:
- EP-A- 0 504 467
- CHEMICAL ABSTRACTS, vol. 110, no. 22, 29 May 1989, Columbus, Ohio, US; abstract no. 195757x, page 166 ; & JP-A-63 285 112
- CHEMICAL ABSTRACTS, vol. 116, no. 18, 4 May 1992, Columbus, Ohio, US; abstract no. 177129p, page 172 ; & JP-A-0 402 606
- CHEMICAL ABSTRACTS, vol. 105, no. 20, 17 November 1986, Columbus, Ohio, US; abstract no. 175242u, page 158 ; & JP-A-61 158 810

## Description

### BACKGROUD OF THE INVENTION

### FIELD OF THE INVENTION

The present invention relates to improvement of a method of preparing a high-purity stable aqueous silica sol which has an SiO₂ concentration of from 30 to 50 % by weight and which is substantially free from any other polyvalent metal oxides than silica and in which the colloidal silica has a mean particle size of falling within the range of from 10 to 30 millimicrons.

In particular, the silica sol to be obtained by the method of the present invention has an extremely low content of oxides of polyvalent metals such as iron or aluminum and is therefore employed for the use which desires the absence of such metals in the silica sol, for example, as an abrasive for semiconductors.

### DESCRIPTION OF THE PRIOR ART

A stable aqueous silica sol of industrial products which are used in various uses is prepared from water-soluble alkali metal silicates, in particular, from water glass of industrial products which are inexpensive and are easily available.

However, the stable aqueous silica sol to be prepared from water glass often has some problems because of the metal oxides which are generally in the silica sol in a slight amount, especially polyvalent metal oxides therein, in some uses, for example as an abrasive for polishing the surfaces of semiconductors, as a raw material for preparing quartz fibers or in any other uses which require a high-purity sol, since the techniques in the field have been high-leveled in these days.

A Method of preparing an aqueous silica sol which is substantially free from alkali metal oxides is already known. For example, U.S. Patent 4,054,536 illustrates a method of preparing an aqueous silica sol which is substantially free from alkali metal oxides, wherein an aqueous sol having pH of from 8 to 10 and SiO₂ content of from 5 to 55 %, which is obtained by adding an aqueous silicic acid solution with a concentration of from 2 to 10 % to a hot aqueous solution of an alkanolamine in a proportion of from 1 to 100 as the molar ratio of SiO₂ to the amine with removing water by distillation, is passed through ion-exchange resins to thereby form an aqueous silica sol having an alkali metal content of 200 ppm or less and having pH of from 2 to 5, and thereafter ammonia is added to the resulting sol so as to make it to have pH of from 9 to 10 whereby a silica sol having an alkali metal content of 200 ppm or less is obtained.

Japanese Patent Application Laid-Open No. 61-158810 has proposed a method of obtaining a silica sol having a low content of any other polyvalent metal oxides than silica, wherein a silicic acid solution which is obtained by bringing an aqueous solution of an alkali silicate having a concentration of from 0.5 to 7 % by weight into contact with a strong acid type cation-exchange resin for alkali-removal is treated with an acid at pH of 2.5 or less and at a temperature of from 0 to 98°C, then the impurities in the thus treated solution are removed by filtration through an ultrafilter, then the resulting solution is passed through a mixed bed composed of cation-exchange and anion-exchange resins and through a chelate resin layer, then ammonia or an amine is added to a part of the resulting oligo-silicic acid solution to give a heel solution having pH of from 7 to 10, and then the remaining part of the oligo-silicic acid solution is gradually and dropwise added to the heel solution at a temperature of 60 to 98 °C so as to grow the particles of the colloidal silica in the sol.

Japanese Patent Application Laid-Open No. 04-2606 has proposed a method of preparing a stable silica sol having an SiO₂ concentration of 30 to 50 % by weight, which is substantially free from any other polyvalent metal oxides than silica and in which the colloidal silica has a mean particle size of 10 to 30 millimicrons. The method comprises the following steps (a) to (h):
(a) preparing an aqueous solution of an active silicic acid having an SiO₂ concentration of 2 to 6 % by weight and a pH value of 2 to 4 by passing an aqueous solution of a commercial alkali metal silicate containing 500 to 10000 ppm of polyvalent metal oxides to silica through a column of a cation-exchange resin in the hydrogen form,
(b) treating the active silicic acid in the solution with a strong acid at lowered pH and 0 to 100°C for 0.5 to 120 hours,
(c) passing the aqueous solution obtained by step (b) through a column of a cation-exchange resin in the hydrogen form and then a column of an anion-exchange resin in the hydroxyl form,
(d) feeding the aqueous solution of active silicic acid obtained by the step (c) into a dilute aqueous solution of an alkali metal silicate with high purity or a dilute aqueous solution of an alkali metal hydroxide over 1 to 20 hours until a molar ratio of 30 to 300 as SiO₂/M₂O of the resulted liquid is obtained while maintaining the liquid temperature of 60 to 100 °C under stirring,
(e) heating the liquid obtained by step (d) at 60 to 150 °C for 0.1 to 10 hours under stirring, thereby to form an aqueous silica sol,
(f) concentrating the sol obtained by step (e) with an ultrafilter,
(g) passing the concentrated sol obtained by step (f) through a column of a cation-exchange resin and then a column of an anion-exchange resin, and
(h) adding ammonia to the sol obtained by step (g) to give a pH value of 8 to 10.5 to the sol.

Where an aqueous silica sol is prepared by the method described in U.S. Patent 4,054,536, using an aqueous solution of an active silicic acid to be obtained by passing a diluted aqueous solution of water glass of a commercial product, as a starting material, through a cation-exchange resin layer, an aqueous silica sol having an alkali metal content to silica of 200 ppm or less can be obtained. However, the aqueous silica sol to be obtained by the method is one having a content of other metals, for example, polyvalent metals such as iron or aluminum, to silica of being 300 ppm or more. The polyvalent metals which are in the aqueous silica sol in such a high content are derived from polyvalent metal oxides which are contained in the water glass of the starting material in a content of about 500 ppm or more.

In accordance with the other method as described in Japanese Patent Laid-Open Application No. 61-158810, all the alkali metals and other polyvalent metals than silicon which are in the alkali metal silicate of the starting material such as water glass are removed before preparing the silica sol. However, the removing step is not efficient as the process of industrial production of silica sol, since supplement of a separately prepared acid solution to the active silicic acid-containing aqueous solution is necessary in an amount corresponding to 20 to 10,000 times of the said aqueous solution in the step of removing the impurities from the aqueous active silicic acid solution containing the acid as previously added thereto by passing the aqueous solution through the ultrafilter. Additionally, in accordance with the method described in Japanese Patent Laid-Open Application No. 61-158810, a long period of 760 hours is necessary for the growth of the colloidal silica particles, and concentration of the resulting silica sol is effected after the completion of the growth of the particles. Therefore, such step of growing the silica particles to be followed by concentration of the resulting silica sol is not also efficient as the process of industrial production of silica sol.

In the method proposed in Japanese Patent Laid-Open No. 04-2606, the process is complicated and not efficient for an industrial production of the sols especially in large scale, since the process needs twice passings of the aqueous solution of silicic acid through columns of a cation-exchange resin in the hydrogen form and needs further a step of aging the aqueous solution of silicic acid containing a strong acid in a large tank for a considerably long time between the twice passings of the aqueous solution of silicic acid through the columns of the resins.

Where a silica sol is employed as a binder, the sol may have a higher binding power when the particle size of the colloidal silica in the sol is smaller. On the contrary, however, the sol would be less stable when the particle size of the colloidal silica of the sol is smaller. Accordingly, in order to compensate the latter drawback, the SiO₂ concentration in the sol is to be lowered. In general, however, when the sol is used as a binder, it is desired to have a sufficient binding power while it has a high SiO₂ concentration. Regarding the particle size distribution of the colloidal silica in a sol, a broad size distribution would give a much higher binding power to the sol than those having a narrow size distribution.

Under the situation, it is one technical theme in this field to provide an improved silica sol that it may be helpful for enhancing the quality of the products to be obtained by the use of the silica sol, as inexpensive industrial products. The present invention is therefore to satisfy the theme and to overcome the problems in the above-mentioned conventional methods of producing a silica sol having a low content of other polyvalent metal oxides than silica therein. Specifically, the present invention is to provide a method of efficiently producing a stable aqueous silica sol, which has a content of other polyvalent metal oxides than silica being 300 ppm or less to silica, which has an SiO₂ concentration of from 30 to 50 % by weight and in which the colloidal silica has a mean particle size of falling within the range of from 10 to 30 millimicrons, from an alkali metal silicate containing polyvalent metal oxides as impurities.

### SUMMARY OF THE INVENTION

The method of the present invention of producing a stable aqueous silica sol which has an SiO₂ concentration of from 30 to 50 % by weight, which is substantially free from any other polyvalent metal oxides than silica and in which the colloidal silica sol has a mean particle size of from 10 to 30 millimicrons is characterized by comprising the following steps (a),(b), (c), (d), (e), (f) and (g) :
(a) a step where an aqueous solution of an alkali metal silicate having a concentration of from 1 to 6 % by weight of SiO₂ of the silicate and a concentration of 150 to 15000 ppm by weight of a salt of a strong acid is prepared by dissolving a salt of a strong acid and an alkali metal silicate containing other polyvalent metal oxides than silica in an amount of 300 to 3000 ppm by weight to the silica of the silicate into water,
(b) a step where the aqueous solution obtained in step (a) is passed through a column filled with a cation-exchange resin in the hydrogen form in such an amount as being sufficient for ion-exchanging all the metal ions in the aqueous solution at a space velocity of from 0.1 to 10 per hour while maintaining a temperature of from 0 to 60°C of the solution inside the column throughout the passing,
(c) a step where the aqueous solution obtained in step (b) is passed through a column filled with an anion-exchange resin in the hydroxyl form in such an amount as being sufficient for ion-exchanging all the anions in the aqueous solution at a space velocity of from 1 to 10 per hour while maintaining a temperature of from 0 to 60°C of the solution inside the column throughout the passing,
(d) a step where an aqueous solution of sodium or potassium hydroxide is added to the aqueous solution obtained in step (c) in a molar ratio of one mol of Na₂O or K₂O in the aqueous solution of the hydroxide to from 60 to 200 moles of SiO₂ contained in the aqueous solution obtained in step (c) while maintaining a temperature of from 0 to 60°C of the resulted solution throughout the adding,
(e) a step where 5 to 40 parts by weight of the solution obtained in step (d) is continuously fed into 1 part by weight of the solution obtained in step (d) in a container for a period of from 50 to 200 hours while maintaining a temperature of from 70 to 100 °C of the liquid under normal or reduced pressure in the container to evaporate water in the liquid and removing the evaporated water from the container so that the volume of the liquid in the container may be constant throughout the feeding, thereby to form a stable aqueous sol of colloidal silica having a mean particle size of from 10 to 30 millimicrons in an SiO₂ concentration of from 30 to 50 % by weight,
(f) a step where the sol obtained in step (e) is passed through a column filled with a cation-exchange resin in the hydrogen form in such an amount as being sufficient for ion-exchanging all the metal ions in the sol at a space velocity of from 2 to 20 per hour while maintaining a temperature of from 0 to 60°C of the sol inside the column throughout the passing,
(g) a step where ammonia is added to the sol obtained in step (f) in an amount to give a pH value of from 8 to 10.5 to the sol at a temperature of from 0 to 100°C of the sol.

Another method of the present invention of producing the stable aqueous silica sol comprises a step where a salt of a strong acid may be replaced by a strong acid in the above mentioned step (a).

Further, another method of the present invention of producing the stable aqueous silica sol comprises a step where a strong acid is added to an effluent from a column of a cation-exchange resin in the hydrogen form through which a diluted aqueous solution of an alkali metal silicate containing polyvalent metal oxides in amount of 300 to 3000 ppm to the silica of the silicate is passed, instead of the aqueous solution of the alkali metal silicate to which the strong acid is added in the above mentioned step (a).

### DETAILED DESCRIPTION OF THE INVENTION

The alkali metal silicate to be employed in the step (a) of the manufacture method of the present invention may be any one which is available as commercial industrial products, but a water-soluble one is preferred which has a molar ratio of silicon to alkali metals as contained therein of being approximately from 0.5 to 4.5 as SiO₂/M₂O (where M means an alkali metal). In particular, for the purpose of producing the silica sol of the invention as inexpensive industrial products in a large-scaled industrial plant, sodium water glass is preferably employed which is a low-priced industrial product and which has a molar ratio of SiO₂/Na₂O of being approximately from 2 to 4. However, the commercial product of water glass for industrial use generally contains some other polyvalent metal oxides than silica as impurities in an amount of approximately from 300 to 10000 ppm to the SiO₂ content in the water glass. Main polyvalent metals which are contained in the water glass in a relatively high content are, for example, aluminum, iron, calcium and magnesium. The commercial products of water glass which contain the metal oxides as impurities in relatively small amount, i. e. from 300 to 3000 ppm by weight to the SiO₂ are suitable for use in the method of the present invention.

In the step (a), an aqueous solution of the alkali metal silicate is prepared by dissolving the alkali metal silicate and a salt of a strong acid or a strong acid into a pure water, for example, a deionized water, so that the resulted solution may have a concentration of from 1 to 6 % by weight of SiO₂ of the silicate and a concentration of from 150 to 15000 ppm by weight of the salt of the strong acid or of from 100 to 10000 ppm by weight of the strong acid.

As the examples of a salt of a strong acid to be used in step (a) in the present invention, there may be mentioned sulfate, nitrate, hydrochloride, sulfamate or formate of Na, K, Li, Cs, NH₄, a quarternary ammonium or an amine, though the preferred salts are sulfate, nitrate or hydrochloride of Na, K, Li or NH₄, and nitrate of Na, K, Li or NH₄ is most preferable. The aqueous solution of the salt is also readily prepared by diluting the salt with a pure water, and is preferably used in a concentration of from about 0.02 to 20 % by weight.

As the strong acid to be used for the preparation of an aqueous solution of an alkali metal silicate in step (a) in the present invention, there may be mentioned inorganic or organic acid. The preferred examples are sulfuric, hydrochloric, sulfamic, nitric or formic acid. Nitric acid is most preferable for lowering the content of aluminum and iron in the sol to be produced by the process according to the present invention. The aqueous solution of the acid is readily prepared by diluting the acid with a pure water. The preferred concentration of the acid solution is about 0.015 to 15 % by weight.

In the step (a), an aqueous solution of active silicic acid having a concentration of from 1 to 6 % by weight of SiO₂, instead of the aqueous solution of the alkali metal silicate, may be prepared by passing the aqueous solution of the silicate having a concentration of from 1 to 6 % by weight of SiO₂ through a column filled with a strong-acid type of cation-exchange resin in the hydrogen form in an amount sufficient to remove all the cations from the solution at a temperature of from 0 to 60 °C and a space velocity of from 1 to 10 per hour, and then the strong acid in an amount of from 100 to 10000 ppm by weight to the effluent from the column is added to the effluent. It is prefrred to start step (b) as soon as possible after the addition of strong acid into the aqueous solution of active silicic acid.

The strong acid may be the same as that used for the preparation of the above aqueous solution of an alkali metal silicate, though nitric acid is also most preferable. The strong acid to be added to the aqueous solution of active silicic acid, however, may preferably have a higher concentration such as about 10 % by weight or even more up to about 100 % by weight so long as the strong acid is in liquid form.

The hydrogen-type strong-acid cation-exchange resin to be employed in the step (a) may be any one which has heretofore been utilized in this technical field for removing alkali metal ions from a water glass-containing aqueous solution, and such is easily available as a commercial product for industrial use. One example of the resin is Amberlite IR-120B (trade name).

In the step (b) of the present invention, the above-mentioned alkali metal silicate-containing aqueous solution or the aqueous solution of silicic acid prepared in step (a) is brought into contact with the above-mentioned hydrogen-type strong-acid cation-exchange resin. The contact is preferably conducted by passing the aqueous solution through a column filled with the ion-exchange resin at 0 to 60°C, preferably at 5 to 50°C; and the solution as passed through the column is recovered as an active silicic acid-containing aqueous solution which has an SiO₂ concentration of from 1 to 6 % by weight and a pH value of from 1.0 to 2.5. The amount of the hydrogen-type strong acid cation-exchange resin to be employed in the step may be such that is sufficient for exchanging all the metal ions in the alkali metal silicate-containing aqueous solution by hydrogen ions. The speed of solution which is passed through the column is preferably approximately from 0.1 to 10 per hour as the space velocity.

The hydroxyl-type strong-basic anion-exchange resin to be employed in the step (c) may be any one which has heretofore been utilized for removing anions from ordinary silica sol, and such is easily available as a commercial product. One example of the anion-exchange resin is Amberlite IRA-410 (trade name).

In the step (c), the aqueous solution as obtained in the step (b) is, preferably immediately after obtaining the same, then brought into contact with the above-mentioned hydroxyl-type strong-basic anion-exchange resin at a temperature of from 0 to 60°C, preferably from 5 to 50°C. The contact may also be effected preferably by passing the solution through a column as filled with the above-mentioned hydroxyl-type strong-basic anion-exchange resin at a space velocity of from 1 to 10 per hour. The aqueous solution as obtained by the passing is, more preferably immediately after obtaining the same, then desirably brought into contact with the above-mentioned hydrogen-type strong-acid cation-exchange resin at 0 to 60°C, preferably at 5 to 50°C. The contact may also be effected preferably by passing the solution through a column as filled with the above-mentioned hydrogen-tipe storong-acid cation exchange resin in an amount of being sufficient for ion-exchanging all the metal ions in the solution, at a space velocity of from 1 to 10 per hour. After the passing, the resulting aqueous solution is recovered, and the recovered solution is an active silicic acid-containing aqueous solution which has a SiO₂ concentration of from 1 to 6 % by weight and a pH value of from 2 to 5. This is then applied to the next step (d).

The aqueous solution of sodium hydroxide or potassium hydroxide to be employed in the step (d) may be obtained by dissolving sodium hydroxide or potassium hydroxide of a commercial product for industrial use, which preferably has a purity of 95 % or more, in a decationized industrial water, preferably in a concentration of from 2 to 20 % by weight. In the step (d), the said sodium or potassium hydroxide-containing aqueous solution is added to the active silicic acid-containing aqueous solution as recovered in the step (c), preferably immediately after the recovery thereof, in a molar ratio of SiO₂/M₂O of being from 60 to 200 where M has the same meaning as that mentioned above. The addition may be effected at a temperature between 0 °C and 60 °C but is preferably effected at room temperature for a possibly shorter period of time. By the addition, a stabilized active silicic acid-containing aqueous solution which has a SiO₂ concentration of from 1 to 6 % by weight and a pH value of from 7 to 9 is obtained. Although the thus prepared solution is stable for a long period of time, it is especially preferably applied to the next step (e) within 30 hours.

The apparatus to be employed for effecting the step (e) may be an ordinary acid-resistant, alkali-resistant and pressure-resistant container as equipped with stirrer, temperature-controlling device, liquid level sensor, pressure-reducing device, liquid-feeding device, steam-cooling device, etc. In the step (e), all or a part (1/5 to 1/40) of the stabilized active silicic acid-containing aqueous solution as obtained in the step (d) is first put in the container as a heel solution. In a large-scaled industrial production plant, it is preferred that all the aqueous solution from the step (d) is used as the heel solution, and another stabilized active silicic acid-containing aqueous solution is separately prepared in accordance with the above-mentioned continuous steps (a) to (d) and the newly prepared solution of an amount of from 5 times to 40 times of the said heel solution is used as the feed solution within 30 hours after the separate preparation of the feed solution. On the other hand, where a part, of from 1/5 to 1/40 time, of the solution as prepared in the previous step (d) is used as the heel solution in the step (e), the remaining solution is used as the feed solsution.

In step (e), the liquid temperature in the inside of the container is kept at 70 to 100°C, preferbly at 80 to 100°C, while the inner pressure in the container is so controlled that water may evaporate from the liquid under the controlled condition. Additionally, the feeding speed of the feed solution and the removing speed of the evaporated water are so controlled that the volume of the liquid in the inside of the container may be maintained constant and that the supplying of the feed solution may be finished within a period of from 50 to 200 hours. Supplying of the feed solution and removal of the evaporated water are always continuously or intermittently effected from the start of the step (e) to the finish thereof, but such are preferably so effected that the volume of the liquid in the inside of the container is maintained constant during the step. Additionally, it is also preferred that the feeding speed of the feed solution is constant.

The hydrogen-type strong-acid cation-exchange resin to be employed in the step (f) may be one which is same as that used in the previous steps (a) and (b). The contact of the stable aqueous sol with the ion exchange resin in the step (f) may be effected at a preferred space velocity of 2 to 20 per hour while the other may be in the same manner as that in the step (b). In step (f), it is preferred that the effluent from the column is further passed through a column of the anion-exchange resin in the same manner as that in step (c), and then the solution which resulted from the contact with the anion-exchange resin is further brought into contact with the cation-exchange resin.

The ammonia to be employed in the step (g) may be a commercial product for industrial use but it is preferably a high-purity one. Desirably, it is employed in the step (g) in the form of an aqueous ammonia having an ammonia concentration of approximately form 5 to 30 % by weight. In place of ammonia, quaternary ammonium hydroxides, guanidine hydroxides or water-soluble amines may also be employed. However, ammonia is generally preferred, except the case where employment of ammonia is specifically undesired.

In the step (g), the above-mentioned ammonia is added to the aqueous sol as obtained in the step (f), preferably immediately after the formation of the sol. The addition may be effected at a temperature of 0°C to 100 °C but is preferably effected at room temperature. The amount of the ammonia to be added is preferably such that the resulting silica sol may have a pH value of from 8 to 10.5. As the case may be, an acid or ammonium salt which is free from any metal components may be added to the sol, if desired, in an amount of 1000 ppm or less.

A modification may be given to the above mentioned method comprising steps (a) to (g). When the silicate used in step (a) contains polyvalent metal oxides in relatively small amounts, i. e. about 300 to 1500 ppm by weight to the silica of the silicate, the salt or the strong acid may be added in such a relatively small amount that a concentration of 150 to 750 ppm by weight of the salt or 100 to 500 ppm by weight of the acid is obtained in the solution in step (a), and the subsequent step may likewise be carried out without step (c), i. e. the aqueous solution of sodium or potassium hydroxide may likewise be added to the aqueous solution obtained in step (b) as in step (d), and further followed likewise by step (e) to (g). However, the sol so obtained likewise in step (g) lacks sufficient stability. Accordingly, it is preferred that a deanionizing step as employed in step (c) may be put after the step (f).

Hence, the modified method of the present invention comprises steps (1), (2), (3), (4), (5), (6) and (7), wherein step (1) is the same as step (a) ; step (2) is the same as step (b) ; step (3) is a step where an aqueous solution of sodium or potassium hydroxide is added to the aqueous solution obtained in step (2) in a molar ratio of one mol of Na₂O or K₂O in the aqueous solution of the hydroxide to from 60 to 200 moles of SiO₂ contained in the aqueous solution obtained in step (2) while maintaining a temperature of from 0 to 60°C of the resulted solution throughout the addition ; step (4) is a step where from 5 to 40 parts by weight of the solution obtained in step (3) is continuously fed into 1 part by weight of the solution obtained in step (3) in a container for a period of from 50 to 200 hours while maintaining a temperature of from 70 to 100°C of the liquid under normal or reduced pressure in the container to evaporate water in the liquid and removing the evaporated water from the container so that the volume of the liquid in the container may be constant throughout the feeding, thereby to form a stable aqueous sol of colloidal silica having a mean particle size of from 10 to 30 millimicrons in a SiO₂ concentration of from 30 to 50 % by weight ; step (5) is a step where the sol obtained in step (4) is passed through a column filled with a cation-exchange resin in the hydrogen form in such an amount as being asufficient for ion-exchanging all the metal ions in the sol at a space velocity of from 2 to 20 per hour while maintaining a temperature of from 0 to 60 °C of the sol inside the column throughout the passing ; step (6) is a step where the sol obtained in step (5) is passed through a column filled with an anion-exchange resin in the hydroxyl form in such an amount as being sufficient for ion-exchanging all the anions in the sol at a space velocity of from 1 to 10 per hour while maintaining a temperature of from 0 to 60°C of the sol inside the column throughout the passing ; and step (7) is a step ; where ammonia is added to the sol obtained in step (6) in an amount to give a pH value of from 8 to 10.5 to the sol at a temperature of from 0 to 100 °C of the sol.

The size of the colloidal particles in the silica sol is calculated out from the specific surface area which is measured by means of a nitrogen gas-adsorbing method of a so-called BET method, as a mean particle size of the particles by a known method. The size of the colloidal particles can be observed with an electronic microscope. The silica sol to be obtained by the step (g), which has a mean particle size of 10 millimicrons, has a particle size distribution of from the minimum particle size of approximately 4 millimicrons to the maximum particle size of approximately 20 millimicrons; and another one, which has a mean particle size of 30 millimicrons, has a particle size distribution of from the minimum particle size of approximately 10 millimicrons to the maximum particle size of approximately 60 millimicrons.

In accordance with the method of the present invention, where the alkali metal silicate-containing aqueous solution or the aqueous solution of silicic acid prepared in step (a) is brought into contact with the hydrogen-type strong-acid cation-exchange resin, an aqueous solution of an alkali metal ion-free active silicic acid is formed. The active silicic acid in the aqueous solution is in the form of silicic acid or oligomers thereof, which have a particle size of 3 millimicrons or less, and the aqueous solution is so unstable that it would be gelled within about 100 hours even in the presence of polyvalent metals such as aluminum. Such instability is more noticeable when the SiO₂ concentration in the solution is higher or the temperature of the solution is higher. Accordingly, when a large amount of the silica sol is desired to be produced in an industrial large-scaled plant, it is recommended that the concentration of the active silicic acid in the aqueous solution to be formed in the step (a) does not exceed about 6 % by weight but it is controlled to be lower than 6 % by weight and that the aqueous solution having such lowered SiO₂ concentration is formed at room temperature. In particular, when the alkali metals or polyvalent metals as existing in the raw material are taken in the inside of the silicic acid polymer particles, such metal would hardly be removed from the particles. Therefore, the aqueous solution is desired to have a lower concentration so that polymerization of the silicic acid would hardly proceed in the solution. Additionally, for the purpose of avoiding gradual polymerization of the silicic acid which is inevitable even at room temperature, all of the aqueous solution of the active silicic acid as formed is desired to be used in the next step as early as possible after the formation thereof. If the SiO₂ concentration in the active silicic acid-containing aqueous solution is lower than approximately 1 % by weight, such is inefficient since the amount of the water to be removed in the step of concentration of the silica sol to be formed later would be too much. In the step (a), the SiO₂ concentration of the alkali metal silicate-containing aqueous solution is controlled to be from 1 to 6 % by weight before it is brought into contact with the cation-exchange resin in step (b), in order that the SiO₂ concentration of the aqueous solution of the active silicic acid to be formed in the said step (b) may be from 1 to 6 % by weight and that the thus formed active silicic acid-containing aqueous solution may be directly applied to the next step (c) immediately after formation thereof.

In the step (b), the introduction of the aqueous solution into the cation-exchange resin-filled column which is preferably employed in the said step is preferably effected at a solution-passing speed of approximately from 0.1 to 10 per hour as the space velocity in order to remove a possibly larger amount of the metal ions from the solution. Additionally, the solution temperature is desired to be from 0 to 60°C in order that polymerization, increase in viscosity or gelation of the active silicic acid solution would hardly occur during the passing through the columun. In the steps (a) to (c), any particular conditions are not added for stabilizing the active silicic acid-containing aqueous solution. Therefore, it is important to keep the above-mentioned SiO₂ concentration and the temperature in these steps.

It was found that the added salt of strong acid or the strong acid such as, for preferred examples, sodium nitrate or nitric acid in a relatively small amount in the aqueous solution of the alkali metal silicate or silicic acid in step (a) is extremely effective for enhancing the degree of removal of the cations as impurities from the solution in the subsequent step where the solution is passed through a column of a cation-exchange resin in the hydrogen form.

The salt or the strong acid to be added in the step (a) has a function of converting the impurity metal components such as alkali metals or polyvalent metals which are bonded to the silicate or the active silicic acid or to the inside of the polymer thereof and which are not in the form of dissociated ions into dissociated ions in the solution. Since the active silicic acid or the silicate is in lower degree of polymerization, the more easily may be extracted the polyvalent metals from the silicate or the active silicic acid, it is also desired that addition of the strong acid or the salt to the aqueous solution of the silicate or silicic acid-contaianing aqueous solution as obtained in the step (a) is finished as early as possible.

However, if the salt of the strong acid in amount less than 150 ppm by weight or the strong acid in amount less than 100 ppm by weigh is added to the solution, the effect of removing the metal ions is not in sufficient level. On the contrary, too much addition of the salt of strong acid as in amount larger than 15000 ppm by weight or of the strong acid as in amount larger than 10000 ppm by weight to the solution causes a solution turbid in white which is not suitable for use in subsequent steps of the present invention.

In the step (b), the metal ions as dissolved out into the solution are removed by the cation-exchange resin. The solution resulted from the cation-exchange resin treatment contains the anions from the acid as added in step (a) so that the dissolved metal ions would easily remain in the solution. As the case may be, the amount of the remaining metal ions in the solution after the anion-exchange resin treatment in step (c) would be such that the solution is to have a pH value of from 5 to 7. In such case, however, the solution would be gelled within about 1 hour. By the second-stage treatment with the cation-exchange resin which is effected after removal of the anions from the solution by the treatment with the anion-exchange resin, such undesired dissolved metal ions may further be removed favorably.

Since the active silicic acid-containing aqueous solution as obtained by the step (c) is so unstable that it would be gelled within 6 hours, it is applied to the next step (d) as soon as possible, preferably immediately after the formation of the solution. Where the amount of the sodium or potassium hydroxide to be added to the unstable active silicic acid-containing aqueous solution is so large that it is less than 60 as the molar ratio of SiO₂/M₂O, the active silicic acid would easily be polymerized and, as a result, growth of the particles in the step (e) would be insufficient or the sol formed would be unstable. On the contrary, however, where the amount is so small that the molar ratio is more than 200, particle size of the colloidal silica could not be enlarged even though the resulting solution is treated in the same manner as in the step (e). Although the solution as obtained in the step (d) is stable for a fairly long period of time at room temperature, polymerization of the active silicic acid therein would be accelerated at a high temperature. Therefore, it is especially preferred that the solution as obtained in the step (d) is applied to the next step (e) within 30 hours. The sodiumd or potassium hydroxide to be added in the step (d) gives a higher speed of growing of colloidal silica particles to the size of from 10 to 30 millimicrons in the next step (e). For instance, the speed with the sodium or potassium hydroxide is about 2 times or more than that with the same molar amount of other bases such as ammonia or amine.

Because of such high speed of growing, the feeding speed of the feed solution may be elevated in the step (e) and therefore the production speed of the silica sol as the final product of the invention is extremely elevated. Additionally, the supplying of the feed solution to be effected at such a high speed in the step (e) is also favorable for making the colloidal silica particles nonuniform in the formed silica sol and for broadening the particle size distribution of the particles therein. In the step (e), water is evaporated out from the formed sol at the same time of the supplying of the feed solution and the evaporated water is removed out from the reaction system, for the purpose of elevating the producing speed of the high concentration silica sol.

If the liquid temperature in the step (e) is lower than 70 °C, the growth of the colloidal silica particles in the solution could not be effected sufficiently so that the resulting solution is to have colloidal silica particles having a mean particle size of less than 10 millimicrons. If the silica sol of such small silica particles is concentrated, the liquid would increase in viscosity or gel so that a stable sol having an SiO₂ concentration of 30 % by weight or more could not be obtained. The speed of growing would be higher when the temperature of the liquid is higher than 70 °C. However, if the temperature is higher than 100 °C, the speed of growing would increase in so high a level as the control of the mean particle size of the particles formed would be difficult.

Where the amount of the feed solution to be supplied is less than 5 times of the amount of the heel solution, the particles could not be grown to the mean particle size of more than 10 millimicrons. In this case, therefore, it is also impossible to obtain a concentrated stable sol having a concentration of 30 % by weight or more. The mean particle size of the colloidal silica particles to be formed is enlarged with increase of the amount of the feed solution to be fed. However, if the amount of the feed solution to be fed is more than 40 times of the heel solution, the mean particle size of the particles to be formed would unfavorably exceed 30 millimicrons. In such case, a sol having a high binding power could not be obtained.

Despite of the situation as above, the relation between the amount of the feed solution and the mean particle size of the colloidal particles to be formed would be further influenced by the feeding speed of the feed solution. For instance, where the feed solution in an amount of from 5 to 40 times of that of the heel solution is added to the heel solution within a period of 50 hours, colloidal silica particles having a mean particle size of larger than 10 millimicrons could not be formed. This could be presumed because of the following reasons: In the step (e), a part of the active silicic acid in the feed solution as fed would not adhere to the surfaces of the colloidal silica particles but would form new nuclei particles in the solution. In particular, when the feeding speed of the feed solution is high, the proportion of the amount of the active silicic acid consumed to form such new nuclei to that which is to be consumed for growing the silica particles would increase. Therefore, colloidal silica particles having a mean particle size of 10 millimicrons or more could not be formed so efficiently in the case. Because of the said reasons. feeding of the feed solution at too high a speed is to be avoided. However, feeding of the feed solution of an amount of from 5 to 40 times of the heel solution in the course of a longer period of time of more than 200 hours is not efficient for the industrial scale production of silica sol. For the production of sols of a constant quality in an industrial scale plant, feeding of the feed solution is preferably effected continuously for a period of from 50 to 200 hours. In the step (e), if the liquid level in the inside of the container fluctuates along the wall of the container because of the feeding of the feed solution and the concentratiion of the liquid in the container which are carried out simultaneously, the gelled product of the silica sol would adhere to the wall of the container along which the liquid level flucturated so that a favorable sol product could not be obtained. Accordingly, in the step (e), the feeding speed of the feed solution and the removing speed of the evaporated water are preferably so controlled that the liquid level in the container may be always constant. If the SiO₂ concentration of the silica sol as formed in the step (e) is concentrated up to more than 50 % by weight or more, the viscosity of the resulting sol would increase to an undesired value. Therefore, it is desired not to form a sol having such a high concentration in the step (e).

Since the sol as formed in the step (e) contains the sodium content or potassium content as added in the previous step (d), the cations are removed from the sol by treatment of the sol with the cation exchange resin in step (f). In particular, in order to further remove the alkali metal ions from the sol, an anion-exchange resin treatment and a cation-exchange resin treatment is again preferably effected. The cation-free sol as obtained in the step (f) does not show the instability like the active silicic acid-containing aqueous solution but it still does not have a sufficient stability. Therefore, it is recommended that the treatment of the sol with the ion-exchange resin is not effected at too high a temperature. The sol is stabilized in the next step (g) as soon as possible after the completion of the step (f), preferably immediately after the completion thereof. For the stabillization, ammonia is added to the sol whereby the resulting sol may have a pH value of from 8 to 10.5. Such ammonia may easily be available as an inexpensive aqueous ammonia of high purity. Additionally, the ammonia in the sol may easily be evaporated out from the silica sol after use. The silica sol prepared by the method of the present invention can be utilized favorably in various uses.

The following examples are intended to illustrate the present invention in more detail but not to limit it in any way.

### EXAMPLE 1 :

### Step (a) :

An aqueous solution of sodium nitrate having a concentration of 0.182 % by weight was prepared by dissolving 67.2 g of a special grade of a commercial chemical of sodium nitrate into 36.85 kg of a pure water.

5.15 kg of a commercial JIS No. 3 of sodium water glass containing 29.5 % by weight of SiO₂, 9.46 % by weight of Na₂O, 220 ppm of Al₂O₃, 50 ppm of Fe₂O₃, 47 ppm of CaO and 26 ppm of MgO was dissolved into 36.917 kg of the aqueous solution of sodium nitrate to obtain 42.067 kg of an aqueous solution of sodium silicate having a concentration of 3.6 % by weight of SiO₂ and 1600 ppm of sodium nitrate.

### Step (b) :

42.0 kg of the aqueous solution of sodium silicate obtained in step (a) was passed through a column of cation-exchange resin in the hydrogen form Amberlite 120B which had been treated with an aqueous solution of sulfuric acid containing hydrogen ions 3 times the capacity of ion-exchanging of the resin, at a temperature of 25°C of the solution inside the column and a space velocity of 2.5 per hour. The effluent from the column was recovered.

### Step (c) :

The effluent from the column recovered in step (b) was passed through a column of anion-exchnge resin in the hydroxyl form Amberlite IRA-410 which had been treated with an aqueous solution of sodium hydroxide containing hydroxyl ions 3 times the capacity of ion-exchanging of the resin, at a temperature of 25 °C of the solution inside the column and a space velocity of 3 per hour. The effluent from the column was recovered.

All of the recovered effluent was again passed through another column of cation-exchange resin in the hydrogen form Amberlite 120B which had been treated with an aqueous solution of sulfuric acid containing hydrogen ions 3 times the capacity of ion-exchanging of the resin, at a temperature of 25°C of the solution inside the column and a space velocity of 5 per hour. 35.7 kg as the total of the effluent from the column was recovered.

The recovered solution had a concentration of 3.52 % by weight of SiO₂, 5.1 ppm of Al₂O₃, 1.7 ppm of Fe₂O₃, 0.8 ppm of CaO and 0.2 ppm of MgO, a pH of 3.98 and an electroconductivity of 38.30 µS/cm. The aqueous solution was still an aqueous solution of an active silicic acid.

### Step (d) :

An aqueous solution of 10 % by weight of sodium hydroxide was prepared by dissolving a special grade of a commercial chemical of sodium hydroxide having a purity of 95 % into a pure water.

208 g of the aqueous solution of sodium hydroxide was added to 35.70 kg of the effluent recovered in step (c) to obtain a stabilized aqueous solution of silicic acid having an SiO₂ concentration of 3.5 % by weight, an SiO₂/Na₂O molar ratio of 80, a pH of 8.14 and an electroconductivity of 748 µS/cm.

### Step (e) :

2.67 kg of the stabilized aqueous solution obtained in step (d) was put in a 5 liter glass container equipped with a stirrer, a condenser, a pressure-reducing device, a liquid level sensor, an electromagnetic valve and a heating device. The solution in the container as a heel solution was heated up to a temperature of 90 °C. Then 27.78 kg of the stabilized aqueous solution obtained in step (d) as a feed solution was continuously fed into the heel solution over a period of 95 hours while maintaining a boiling temperture of 90°C of the liquid under reduced pressure and a constant volume of the liquid in the container by removing continuously the evaporated water from the container.

After completion of the feeding, the liquid in the container was cooled to a room temperature. 3.23 kg of an aqueous silica sol was discharged from the container. The sol had a concentration of 33.0 % by weight of SiO₂, 47.8 ppm of Al₂O₃, 15.9 ppm of Fe₂O₃, an SiO₂/Na₂O molar ratio of 85.2, a specific gravity of 1.233, a viscocity of 24.8 cp at 20°C, a pH of 9.82, a mean particle size of 13.2 mµ of the colloidal silica by BET method and an electroconductivity of 3315 µS/cm. The sol after stored at 60°C for 1 month showed no change in properties.

### Step (f) :

The sol obtained in step (e) was passed through a column of the same cation-exchange resin in the hydrogen form Amberlite 120B as that used in step (b) at a temperature of 25°C of the sol inside the column and a space velocity of 3 per hour. All the effluent from the column was recovered.

All the effluent recovered was passed through a column of the same anion-exchange resin in the hydroxyl form Amberlite IRA-410 as that used in step (c) at a temperature of 25°C of the sol inside the column and a space velocity of 3 per hour.

Then the effluent from the column of the anion-exchange resin was passed through a column of the same cation-exchange resin in the hydrogen form Amberlite 120B as that used in step (b) at a temperature of 25 °C of the sol inside the column and a space velocity of 3 per hour. 3.15 kg of an acidic aqueous silica sol was recovered as the effluent from the column.

The sol had a concentration of 30.7 % by weight of SiO₂, 220 ppm of Na₂O, an SiO₂/Na₂O molar ratio of 1440, a specific gravity of 1.205, a pH of 4.58, a viscosity of 3.6 cp at 20°C and an electroconductivity of 79 µS/cm.

### Step (g) :

15 g of a specific grade of a commercial chemical of an aqueous ammonia having a concentration of 28 % by weight was added to 2000 g of the recovered sol having a pH of 4.58 under stirring. The resulted aqueous silica sol had an SiO₂ concentration of 30.5 % by weight, an SiO₂/(NH₄)₂O molar ratio of 83, 44.2 ppm of Al₂O₃, 14.7 ppm of Fe₂O₃, 220 ppm of Na₂O, 4.0 ppm of Cl, 7.5 ppm of SO₄, a specific gravity of 1.205, a pH of 9.12, a viscosity of 9.6 cp at 20°C and an electroconductivity of 2720 µS/cm. The particle size of the colloidal silica distributed from 4 mµ at minimum to 20 mµ at maximum according to the observation by electronic microscope. The sol after stored at 60°C for 1 month showed no change in properties.

### EXAMPLE 2 :

In this example, the following step (d) to (g) was carried out after the same step as step (c) in example 1.

### Step (d) :

146 g of the same aqueous solution of sodium hydroxide as in example 1 was added to 40.4 kg of the effluent recovered in step (c) to obtain a stabilized aqueous solution of silicic acid having an SiO₂ concentration of 3.5 % by weight, an SiO₂/Na₂O molar ratio of 130, a pH of 7.72 and an electroconductivity of 620 µS/cm.

### Step (e) :

2.54 kg of the stabilized aqueous solution obtained in step (d) was put in the same container as that used in step (e) in example 1.

The solution in the container as a heel solution was heated up to a temperature of 95 °C. Then 38 kg of the stabilized aqueous solution obtained in step (d) as a feed solution was continuously fed into the heel solution over a period of 180 hours while maintaining a boiling temperture of 95°C of the liquid under reduced pressure and a constant volume of the liquid in the container by removing continuously the evaporated water from the container.

After completion of the feeding, the liquid in the container was cooled to a room temperature. 3.33 kg of an aqueous silica sol was discharged from the container. The sol had a concentration of 42.6 % by weight of SiO₂, 61.7 ppm of Al₂O₃, 26.6 ppm of Fe₂O₃, an SiO₂/Na₂O molar ratio of 148, a specific gravity of 1.320, a viscosity of 28.2 cp at 20°C, a pH of 9.76, a mean particle size of 21.0 mµ of the colloidal silica by BET method and an electroconductivity of 2180 µS/cm. The sol after stored at 60 °C for 1 month showed no change in properties.

### Step (f) :

The sol obtained in step (e) was passed through a column of the same cation-exchange resin in the hydrogen form Amberlite 120B as that used in step (b) at a temperature of 25°C of the sol inside the column and a space velocity of 3 per hour. The effluent from the column was recovered.

All the effluent recovered was passed through a column of the same anion-exchange resin in the hydroxyl form Amberlite IRA-410 as that used in step (c) at a temperature of 25°C of the sol inside the column and a space velocity of 3 per hour.

Then the effluent from the column of the anion-exchange resin was passed through a column of the same cation-exchange resin in the hydrogen form Amberlite 120B as that used in step (b) at a temperature of 25 °C of the sol inside the column and a space velocity of 3 per hour. 3.1 kg of an acidic aqueous silica sol was recovered as the effluent from the column.

The sol had a concentration of 40.7 % by weight of SiO₂, 740 ppm of Na₂O, an SiO₂/Na₂O molar ratio of 568, a specific gravity of 1.293, a pH of 4.24, a viscosity of 5.6 cp at 20 °C and an electroconductivity of 165 µS/cm.

### Step (g) :

19 g of a specific grade of a commercial chemical of an aqueous ammonia having a concentration of 28 % by weight and 9.6g of an aqueous solution of nitric acid having a concentration of 10 % by weight was added to 3001.4 g of the recovered sol having a pH of 4.24 under stirring.

The resulted aqueous silica sol had an SiO₂ concentration of 40.3 % by weight, an SiO₂/(NH₄)₂O molar ratio of 143, 58.4 ppm of Al₂O₃, 19.5 ppm of Fe₂O₃, 732 ppm of Na₂O, 5.5 ppm of Cl, 10.0 ppm of SO₄, 320 ppm of NO₃, a specific gravity of 1.293, a pH of 9.4, a viscosity of 19 cp at 20 °C and an electroconductivity of 4120 µS/cm. The particle size of the colloidal silica distributed from 7 mµ at minimum to 40 mµ at maximum, and the shape of the colloidal silica was nonspheroidal according to the observation by electronic microscope. The sol after stored at 60 °C for 1 month showed no change in properties.

### COMPARATIVE EXAMPLE 1 :

In this example, the feed solution was fed into the heel solution in a period of 32 hours instead of 95 hours in step (e) in example 1 while the other was carried out in the same way as in example 1.

At a stage during the feeding when the concentration of SiO₂ in the liquid in the container reached about 25 % by weight, the viscosity of the liquid began to increase.The particle size of the colloidal silica in the liquid at the stage was 6.8 mµ as measured by BET method. However, the feeding was further continued until all of the feeding solution was fed into the heel solution, while the viscosity of the liquid increased extremely and formation of gel occurred at the end point of the feeding.

It was not easy to discharge the final liquid smoothly from the container. The highly viscous liquid discharged from the container changed to a gel having nonfluidity when cooled and left to stand at room temperature.

### EXAMPLE 3 :

### Step (a) :

An aqueous solution of nitric acid having a concentration of 0.140 % by weight was prepared by dissolving 84.3 g of a special grade of a commercial chemical of nitric acid having a specific gravity of 1.38 and a content of 61.3 % by weight of nitric acid into 36.85 kg of a pure water.

5.15 kg of the same sodium water glass as that used in step (a) in example 1 was dissolved into 36.9 kg of the aqueous solution of nitric acid to obtain 42.0 kg of an aqueous solution of sodium silicate having a concentration of 3.6 % by weight of SiO₂ and 1230 ppm of nitric acid.

### Step (b) :

42.0 kg of the aqueous solution of sodium silicate obtained in step (a) was passed through a column of the same cation-exchange resin in the hydrogen form Amberlite 120B as that used in step (b) in example 1 at a temperature of 25°C of the solution inside the column and a space velocity of 2.5 per hour. The effluent from the column was recovered.

### Step (c) :

The effluent from the column recovered in step (b) was passed through a column of the same anion-exchange resin in the hydroxyl form Amberlite IRA-410 as that used in step (c) in example 1 at a temperature of 25°C of the solution inside the column and a space velocity of 3 per hour.

The effluent from the column of the Amberlite IRA-410 was recovered and again all of the recovered effluent was passed through another column of the same cation-exchange resin in the hydrogen form Amberlite 120B as that used in step (b) in example 1 at a temperature of 25 °C of the solution inside the column and a space velocity of 5 per hour. 35.7 kg as the total of the effluent from the column was recovered.

The recovered solution had a concentration of 3.52 % by weight of SiO₂, 4.8 ppm of Al₂O₃, 0.88 ppm of Fe₂O₃, 0.7 ppm of CaO and 0.2 ppm of MgO, a pH of 3.93 and an electroconductivity of 36.30 µS/cm.

The aqueous solution was still an aqueous solution of an active silicic acid containing polyvalent metal oxides in an amount less than 300 ppm to SiO₂ in the solution. Step (d) to step (g) could be carrried out in the same manner as in example 1.

### COMPARATIVE EXAMPLE 2 :

In this example, a reduced amount of 4.6 g instead of 67.2 g of sodium nitrate in step (a) in example 1 was dissolved into a pure water while the other was carried out in the same manner as in step (a) to step (c).

The resulted solution of active silicic acid had a concentration of 3.52 % by weight of SiO₂, 14.0 ppm of Al₂O₃, 1.2 ppm of Fe₂O₃, 1.2 ppm of CaO, 0.8 ppm of MgO, a pH of 3.87 and an electroconductivity of 45.6 µS/cm.

The resulted solution of active silicic acid was not suitable for use in the subsequent steps (d) to step (h) as in example 1, since the amount of polyvalent metal oxides to SiO₂ in the solution was larger than 300 ppm.

### COMPARATIVE EXAMPLE 3 :

In this example, a large amount of 8.4 kg of a special grade of sodium chloride in commerce was dissolved into 28.45 kg of a pure water while the other was carried out in the same manner as in step (a) in example 1.

The resulted solution of sodium silicate contained 10 % by weight of sodium chloride and 3.6 % by weight of SiO₂, and was turbid in white caused by flocks formed in the solution. The solution was not suitable for use in the subsequent steps.

### COMPARATIVE EXAMPLE 4 :

In this example, a large amount of 1.26 kg of nitric acid was dissolved into 35.59 kg of a pure water while the other was carried out in the same way as in step (a) in example 1.

The resulted solution of sodium silicate contained 1.8 % by weight of nitric acid and 3.6 % by weight of SiO₂, and was turbid in white caused by flocks formed in the solution. The solution was not suitable for use in the subsequent steps.

### EXAMPLE 4 :

### Step (a) :

5.15 kg of the same sodium water glass as that used in step (a) in example 1 was dissolved into 36.85 kg of a pure water to obtain 42.0 kg of an aqueous solution of sodium silicate having a concentration of 3.6 % by weight of SiO₂.

42.0 kg of the aqueous solution of sodium silicate was passed through a column of the same cation-exchange resin in the hydrogen form Amberlite 120B as that used in step (b) in example 1 at a temperature of 25°C of the solution inside the column and a space velocity of 3 per hour. 35.7 kg of an aqueous solution of active silicic acid was recovered as the effluent from the column.

The recovered solution of silicic acid had 3.54 % by weight of SiO₂, a pH of 2.78 and an electroconductivity of 667.5 µS/cm.

70.0 g of the same nitric acid as that used in step (a) in example 3 was added to 35.7 kg of the silicic acid solution recovered. The resulted solution had a pH of 1.71 and contained 1200 ppm of nitric acid.

### Step (b) :

The resulted solution having a pH of 1.71 was passed through a column of the same cation-exchange resin in the hydrogen form Amberlite 120B as that used in step (b) in example 1 at a temperature of 25 °C of the solution inside the column and a space velocity of 2.5 per hour. The aqueous solution of active silicic acid was recovered as the effluent from the column.

### Step (c) :

The effluent from the column recovered in step (b) was passed through a column of the same anion-exchange resin in the hydroxyl form Amberlite IRA-410 as that used in step (c) in example 1 at a temperature of 25 °C of the solution inside the column and a space velocity of 3 per hour.

The effluent from the column of the Ambelite IRA-410 was recovered and again all of the recovered effluent was passed through another column of the same cation-exchange resin in the hydrogen form Amberlite 120B as that used in step (b) at a temperature of 25°C of the solution inside the column and a space velocity of 5 per hour. 30.28kg as the total of the effluent from the column was recovered.

The recovered solution had a concentration of 3.52 % by weight of SiO₂, 2.8 ppm of Al₂O₃, 0.95 ppm of Fe₂O₃, 0.8 ppm of CaO and 0.2 ppm of MgO, a pH of 4.06 and an electroconductivity of 35.80 µS/cm.

### Step (d) :

178 g of an aqueous solution of 10 % by weight of sodium hydroxide prepared likewise in step (d) in example 1 was added to 30.28 kg of the effluent immediately after recovered in step (c) to obtain a stabilized aqueous solution of silicic acid having an SiO₂ concentration of 3.5 % by weight, an SiO₂/Na₂O molar ratio of 80, a pH of 8.17 and an electroconductivity of 735 µS/cm.

### Step (e) :

2.67 kg of the stabilized aqueous solution obtained in step (d) as a heel solution was put in the same container as that used in step (e) in example 1.

The heel solution was heated up to a temperature of 90 °C. Then 27.78 kg of the stabilized aqueous solution obtained in step (d) as a feed solution was continuously fed into the heel solution over a period of 95 hours while the other was carried out in the same way as that in step (e) in example 1.

After completion of the feeding, the liquid in the container was cooled to a room temperature. 3.23 kg of an aqueous silica sol was discharged from the container. The sol had a concentration of 33.0 % by weight of SiO₂, 26.3 ppm of Al₂O₃ and 8.9 ppm of Fe₂O₃, an SiO₂/Na₂O molar ratio of 85.2, a specific gravity of 1.233, a viscosity of 25.0 cp at 20°C, a pH of 9.89, a mean particle size of 13.1 mµ of the colloidal silica by BET method and an electroconductivity of 3260 µS/cm. The sol after stored at 60°C for 1 month showed no change in properties.

### Step (f) :

The sol obtained in step (e) was passed through a column of the same cation-exchange resin in the hydrogen form Amberlite 120B as that used in step (b) in example 1 at a temperature of 25 °C of the sol inside the column and a space velocity of 3 per hour. All the effluent from the column was recovered.

All the effluent recovered in step (f) was passed through a column of the same anion-exchange resin in the hydroxyl form Amberlite IRA-410 as that used in step (c) in example 1 at a temperature of 25°C of the sol inside the column and a space velocity of 3 per hour.

Then the effluent from the column of the anion-exchange resin was passed through a column of the same cation-exchange resin in the hydrogen form Amberlite 120B as that used in step (b) at a temperature of 25 °C of the sol inside the column and a space velocity of 3 per hour. 3.15 kg of an acidic aqueous silica sol was recovered as the effluent from the column.

The sol had a concentration of 30.7 % by weight of SiO₂, 205 ppm of Na₂O, an SiO₂/Na₂O molar ratio of 1550, a specific gravity of 1.205, a pH of 4.68, a viscosity of 3.6 cp at 20°C and an electroconductivity of 75 µS/cm.

### Step (g) :

15 g of a special grade of a commercial chemical of an aqueous ammonia having a concentration of 28 % by weight was added to 2000 g of the recovered sol having a pH of 4.68 under stirring. The resulted aqueous silica sol had an SiO₂ concentration of 30.5 % by weight, an SiO₂/(NH₄)₂O molar ratio of 83, 24.2 ppm of Al₂O₃, 8.23 ppm of Fe₂O₃, 205 ppm of Na₂O, 4.0 ppm of Cl, 7.5 ppm of SO₄, a specific gravity of 1.205,a pH of 9.15, a viscosity of 9.6 cp at 20°C and an electroconductivity of 2780 µS/cm. The particle size of the colloidal silica distributed from 4 mµ at minimum to 20 mµ at maximum according to the observation by electronic microscope. The sol after stored at 60°C for 1 month showed no change in properties.

### EXAMPLE 5 :

In this example, the following step (d) to (g) was carried out after the same step as step (c) in example 4.

### Step (d) :

146 g of the same aqueous solution of sodium hydroxide as in example 1 was added to 40.4 kg of the effluent recovered in step (c) to obtain a stabilized aqueous solution of silicic acid having an SiO₂ concentration of 3.5 % by weight, an SiO₂/Na₂O molar ratio of 130, a pH of 7.76 and an electroconductivity of 618 µS/cm.

### Step (e) :

2.54 kg of the stabilized aqueous solution obtained in step (d) as a heel solution was put in the same container as that used in stap(e) in example 1.

The heel solution was heated up to a temperature of 95°C. Then 38 kg of the stabilized aqueous solution obtained in step (d) as a feed solution was continuously fed into the heel solution over a period of 180 hours in the same manner as in step (e) in example 1.

After completion of the feeding, the liquid in the container was cooled to a room temperature. 3.33 kg of an aqueous silica sol was discharged from the container. The sol had a concentration of 42.6 % by weight of SiO₂, 34.4 ppm of Al₂O₃ and 11.7 ppm of Fe₂O₃, an SiO₂/Na₂O molar ratio of 148, a specific gravity of 1.320, a viscosity of 28.2 cp at 20 °C, a pH of 9.76, a mean particle size of 20.5 mµ of the colloidal silica by BET method and an electroconductivity of 2140 µS/cm. The sol after stored at 60 °C for 1 month showed no change in properties.

### Step (f) :

The sol obtained in step (e) was passed through a column of the same cation-exchange resin in the hydrogen form Amberlite 120B as that used in step (b) in example 1 at a temperature of 25 °C of the sol inside the column and a space velocity of 3 per hour. All the effluent from the column was recovered.

All the effluent recovered was passed through a column of the same anion-exchange resin in the hydroxyl form Amberlite IRA-410 as that used in step (c) in example 1 at a temperature of 25 °C of the sol inside the column and a space velocity of 3 per hour.

Then the effluent from the column of the anion-exchange resin was passed through a column of the same cation-exchange resin in the hydrogen form Amberlite 120B as that used in step (b) in example 1 at a temperature of 25°C of the sol inside the column and a space velocity of 3 per hour. 3.1 kg of an acidic aqueous silica sol was recovered as the effluent from the column.

The sol had a concentration of 40.7 % by weight of SiO₂, 720 ppm of Na₂O, an SiO₂/Na₂O molar ratio of 583, a specific gravity of 1.293, a pH of 4.63, a viscosity of 5.6 cp at 20 °C and an electroconductivity of 145 µS/cm.

### Step (g) :

19 g of a special grade of a commercial chemical of an aqueous ammonia having a concentration of 28 % by weight and 9.6g of an aqueous solution of nitric acid having a concentration of 10 % by weight was added to 3000 g of the recovered sol having a pH of 4.63 under stirring. The resulted aqueous silica sol had an SiO₂ concentration of 40.3 % by weight, an SiO₂/(NH₄)₂O molar ratio of 143, 32.0 ppm of Al₂O₃, 10.9 ppm of Fe₂O₃, 713 ppm of Na₂O, 5.5 ppm of Cl, 10.0 ppm of SO₄, 320 ppm of NO₃, a specific gravity of 1.293, a pH of 9.4, a viscosity of 21 cp at 20 °C and an electroconductivity of 4010 µS/cm. The particle size of the colloidal silica distributed from 7 mµ at minimum to 40 mµ at maximum, and the shape of the colloidal silica was nonspheroidal according to the observation by electronic microscope. The sol after stored at 60°C for 1 month showed no change in properties.

### COMPARATIVE EXAMPLE 5 :

In this example, the feed solution was fed into the heel solution in a period of 32 hours instead of 180 hours in step (e) in example 5 while the other was carried out in the same way as in example 5.

At a stage during the feeding when the concentration of SiO₂ in the liquid in the container reached about 25 % by weight, the viscosity of the liquid began to increase.

The particle size of the colloidal silica in the liquid at the stage was 6.8 mµ as measured by BET method. However, the feeding was further continued until all of the feeding solution was fed into the heel solution, while the viscosity of the liquid increased extremely and formation of gel occurred at the end point of the feeding.

It was not easy to discharge the final liquid smoothly from the container. The highly viscous liquid discharged from the container changed to a gel having nonfluidity when cooled and left to stand at room temperature.

### COMPARATIVE EXAMPLE 6 :

In this example, step (a) was carried out at a space velocity of 2 per hour instead of 2.5 per hour, and a reduced amount of 4.7 g in stead of 70.0 g of nitric acid was dissolved into the aqueous solution while the other was the same as in example 4. Step (b) and step (c) was carried out in the same manner as in example 4.

The resulted solution of active silicic acid had a concentration of 3.50 % by weight of SiO₂, 11.4 ppm of Al₂O₃, 1.2 ppm of Fe₂O₃, 1.2 ppm of CaO and 0.8 ppm of MgO, a pH of 3.86 and an electroconductivity of 45.4 µS/cm.

The resulted solution of active silicic acid was not suitable for use in subsequent steps, since the amount of polyvalent metal oxides to SiO₂ in the solution was larger than 300 ppm.

### EXAMPLE 6 :

### Step (1) :

An aqueous solution of sodium nitrate having a concentration of 0.040 % by weight was prepared by dissolving 64.7 g of a special grade of a commercial chemical of sodium nitrate into 36.85 kg of a pure water.

5.15 kg of a commercial JIS No. 3 of sodium water glass containing 29.5 % by weight of SiO₂, 9.46 % by weight of Na₂O, 220 ppm of Al₂O₃, 50 ppm of Fe₂O₃, 47 ppm of CaO and 26 ppm of MgO was dissolved into 36.917 kg of the aqueous solution of sodium nitrate to obtain 42.067 kg of an aqueous solution of sodium silicate having a concentration of 3.6 % by weight of SiO₂ and 350 ppm of sodium nitrate.

### Step (2) :

42.0 kg of the aqueous solution of sodium silicate obtained in step (1) was passed through a column of the same cation-exchange resin in the hydrogen form Amberlite 120B as that used in step (b) in example 1 at a temperature of 25°C of the solution inside the column and a space velocity of 0.5 per hour. The effluent from the column was recovered.

The recovered solution had a concentration of 3.52 % by weight of SiO₂, 249 ppm of NO₃, 6.8 ppm of Al₂O₃, 1.2 ppm of Fe₂O₃, 0.8 ppm of CaO, 0.2 ppm of MgO, a pH of 2.23 and an electroconductivity of 2064 µS/cm. The aqueous solution was still an aqueous solution of an active silicic acid.

### Step (3) :

An aqueous solution of 10 % by weight of sodium hydroxide was prepared by dissolving a special grade of a commercial chemical of sodium hydroxide having a purity of 95 % into a pure water.

265 g of the aqueous solution of sodium hydroxide was added to 35.70 kg of the effluent recovered in step (2) to obtain a stabilized aqueous solution of silicic acid having an SiO₂ concentration of 3.5 % by weight, 340 ppm of NaNO₃, an SiO₂/Na₂O molar ratio of 80, a pH of 7.98 and an electroconductivity of 1210 µS/cm.

### Step (4) :

2.67 kg of the stabilized aqueous solution obtained in step (3) was put in the same container as that used in step (d) example 1. The solution in the container as a heel solution was heated up to a temperature of 90 °C. Then 27.78 kg of the stabilized aqueous solution obtained in step (3) as a feed solution was continuously fed into the heel solution over a period of 95 hours while maintaining a boiling temperture of 90°C of the liquid under reduced pressure and a constant volume of the liquid in the container by removing continuously the evaporated water from the container.

After completion of the feeding, the liquid in the container was cooled to a room temperature. 3.23 kg of an aqueous silica sol was discharged from the container. The sol had a concentration of 33.0 % by weight of SiO₂, 0.318 % by weight of NaNO₃, 63.8 ppm of Al₂O₃ , 11.2 ppm of Fe₂O₃, an SiO₂/Na₂O molar ratio of 85.2, a specific gravity of 1.233, a viscosity of 3.90 cp at 20°C, a pH of 9.68, a mean particle size of 13.2 mµ of the colloidal silica by BET method and an electroconductivity of 6920 µS/cm.

### Step (5) :

The sol obtained in step (4) was passed through a column of the same cation-exchange resin in the hydrogen form Amberlite 120B as that used in step (2) at a temperature of 25°C of the sol inside the column and a space velocity of 3 per hour. The effluent from the column was recovered.

### Step (6) :

The effluent from the column recovered in step (5) was passed through a column of the same anion-exchnge resin in the hydroxyl form Amberlite IRA-410 as that used in step (c) in example 1 at a temperature of 25°C of the solution inside the column and a space velocity of 3 per hour.

Then the effluent from the column of the anion-exchange resin was passed through a column of the same cation-exchange resin in the hydrogen form Amberlite 120B as that used in step (2) at a temperature of 25 °C of the sol inside the column and a space velocity of 3 per hour. 3.15 kg of an acidic aqueous silica sol was recovered as the effluent from the column.

The sol had a concentration of 30.7 % by weight of SiO₂, 230 ppm of Na₂O, an SiO₂/Na₂O molar ratio of 1380, a specific gravity of 1.205, a pH of 4.52, a viscosity of 3.6 cp at 20°C and an electroconductivity of 85 µS/cm.

### Step (7) :

15 g of a specific grade of a commercial chemical of an aqueous ammonia having a concentration of 28 % by weight was added to 2000 g of the recovered sol having a pH of 4.58 under stirring. The resulted aqueous silica sol had an SiO₂ concentration of 30.5 % by weight, an SiO₂/(NH₄)₂O molar ratio of 83, 58.9 ppm of Al₂O₃, 10.4 ppm of Fe₂O₃, 230 ppm of Na₂O, 7.5 ppm of NO₃, 2.0 ppm of Cl, 4.0 ppm of SO₄, a specific gravity of 1.205, a pH of 9.10, a viscosity of 9.6 cp at 20 °C and an electroconductivity of 2930 µS/cm. The particle size of the colloidal silica distributed from 4 mµ at minimum to 20 mµ at maximum according to the observation by electronic microscope. The sol after stored at 60°C for 1 month showed no change in properties.

### COMPARATIVE EXAMPLE 7 :

In this example, step (6) was cut down from the process.

### Step (1) :

An aqueous solution of sodium nitrate having a concentration of 0.040 % by weight was prepared by dissolving 64.7 g of a special grade of a commercial chemical of sodium nitrate into 36.85 kg of a pure water.

5.15 kg of a commercial JIS No. 3 of sodium water glass containing 29.5 % by weight of SiO₂, 9.46 % by weight of Na₂O, 220 ppm of Al₂O₃, 50 ppm of Fe₂O₃, 47 ppm of CaO and 26 ppm of MgO was dissolved into 36.917 kg of the aqueous solution of sodium nitrate to obtain 42.067 kg of an aqueous solution of sodium silicate having a concentration of 3.6 % by weight of SiO₂ and 350 ppm of sodium nitrate.

### Step (2) :

42.0 kg of the aqueous solution of sodium silicate obtained in step (1) was passed through a column of the same cation-exchange resin in the hydrogen form Amberlite 120B as that used in step (b) in example 1 at a temperature of 25°C of the solution inside the column and a space velocity of 2.5 per hour. The effluent from the column was recovered.

### Step (3) :

An aqueous solution of 10 % by weight of sodium hydroxide was prepared by dissolving a special grade of a commercial chemical of sodium hydroxide having a purity of 95 % into a pure water.

265 g of the aqueous solution of sodium hydroxide was added to 35.70 kg of the effluent recovered in step (2) to obtain a stabilized aqueous solution of silicic acid having an SiO₂ concentration of 3.5 % by weight, 340 ppm of NaNO₃, an SiO₂/Na₂O molar ratio of 80, a pH of 7.98 and an electroconductivity of 1210 µS/cm.

### Step (4) :

2.67 kg of the stabilized aqueous solution obtained in step (3) was put in the same container as that used in step (e) in example 1. The solution in the container as a heel solution was heated up to a temperature of 90°C. Then 27.78 kg of the stabilized aqueous solution obtained in step (3) as a feed solution was continuously fed into the heel solution over a period of 95 hours while maintaining a boiling temperture of 90°C of the liquid under reduced pressure and a constant volume of the liquid in the container by removing continuously the evaporated water from the container.

After completion of the feeding, the liquid in the container was cooled to a room temperature. 3.23 kg of an aqueous silica sol was discharged from the container. The sol had a concentration of 33.0 % by weight of SiO₂, 0.318 % by weight of NaNO₃, 63.8 ppm of Al₂O₃, 16.2 ppm of Fe₂O₃, an SiO₂/Na₂O molar ratio of 85.2, a specific gravity of 1.233, a viscocity of 3.90 cp at 20°C, a pH of 9.68, a mean particle size of 13.2 mµ of the colloidal silica by BET method and an electroconductivity of 6920 µS/cm.

### Step (5) :

The sol obtained in step (4) was passed through a column of the same cation-exchange resin in the hydrogen form Amberlite 120B as that used in step (2) at a temperature of 25°C of the sol inside the column and a space velocity of 3 per hour. 3.15 kg of an acidic aqueous silica sol was recovered as the effluent from the column.

The sol had a concentration of 30.7 % by weight of SiO₂, 2160 ppm of NO₃, 230 ppm of Na₂O, an SiO₂/Na₂O molar ratio of 1380, a specific gravity of 1.205, a pH of 1.49, a viscosity of 3.6 cp at 20°C and an electroconductivity of 9920 µS/cm.

### Step (7) :

19.2 g of a specific grade of a commercial chemical of an aqueous ammonia having a concentration of 28 % by weight was added to 2000 g of the recovered sol having a pH of 1.49 under stirring. The resulted aqueous silica sol had an SiO₂ concentration of 30.5 % by weight, 0.277 % by weight of NH₄NO₃, an SiO₂/(NH₄)₂O molar ratio of 83, 58.9 ppm of Al₂O₃, 10.4 ppm of Fe₂O₃, 230 ppm of Na₂O, 180 ppm of Cl, 230 ppm of SO₄, a specific gravity of 1.205,a pH of 8.84, a viscosity of 4.2cp at 20 °C and an electroconductivity of 8830 µS/cm. The particle size of the colloidal silica distributed from 4 mµ at minimum to 20 mµ at maximum according to the observation by electronic microscope. The sol after stored at 60°C for 1 month changed to a gel.

## Claims

1. A method of preparing a stable aqueous silica sol which has an SiO₂ concentration of from 30 to 50 % by weight, which is substantially free from any other polyvalent metal oxides than silica and in which the particle of colloidal silica have a mean particle size of from 10 to 30 millimicrons, comprising the steps (a), (b) , (c), (d), (e), (f) and (g) :
(a) a step where an aqueous solution of an alkali metal silicate having a concentration of from 1 to 6 % by weight of SiO₂ of the silicate and a concentration of from 150 to 15000 ppm by weight of a salt of a strong acid is prepared by dissolving a salt of a strong acid and an alkali metal silicate containing other polyvalent metal oxides than silica in an amount of from 300 to 3000 ppm by weight to the silica of the silicate into water,
(b) a step where the aqueous solution obtained in step (a) is passed through a column filled with a cation-exchange resin in the hydrogen form in such an amount as being sufficient for ion-exchanging all the metal ions in the aqueous solution at a space velocity of from 0.1 to 10 per hour while maintaining a temperature of from 0 to 60°C of the solution inside the column throughout the passing,
(c) a step where the aqueous solution obtained in step (b) is passed through a column filled with an anion-exchange resin in the hydroxyl form in such an amount as being sufficient for ion-exchanging all the anions in the aqueous solution at a space velocity of from 1 to 10 per hour while maintaining a temperature of from 0 to 60°C of the solution inside the column throughout the passing,
(d) a step where an aqueous solution of sodium or potassium hydroxide is added to the aqueous solution obtained in step (c) in a molar ratio of one mol of Na₂O or K₂O in the aqueous solution of the hydroxide to from 60 to 200 moles of SiO₂ contained in the aqueous solution obtained in step (c) while maintaining a temperature of from 0 to 60 °C of the resulted solution throughout the adding,
(e) a step where from 5 to 40 parts by weight of the solution obtained in step (d) is continuously fed into 1 part by weight of the solution obtained in step (d) in a container for a period of from 50 to 200 hours while maintaining a temperature of from 70 to 100°C of the liquid under normal or reduced pressure in the container to evaporate water in the liquid and removing the evaporated water from the container so that the volume of the liquid in the container may be constant throughout the feeding, thereby to form a stable aqueous sol of colloidal silica having a mean particle size of from 10 to 30 millimicrons in an SiO₂ concentration of from 30 to 50 % by weight,
(f) a step where the sol obtained in step (e) is passed through a column filled with a cation-exchange resin in the hydrogen form in such an amount as being sufficient for ion-exchanging all the metal ions in the sol at a space velocity of from 2 to 20 per hour while maintaining a temperature of from 0 to 60 °C of the sol inside the column throughout the passing,
(g) a step where ammonia is added to the sol obtained in step (f) in an amount to give a pH value of from 8 to 10.5 to the sol at a temperature of from 0 to 100 °C of the sol.

2. The method of preparing an aqueous silica sol as claimed in claim 1, in which the alkali metal silicate in step (a) is a sodium water glass having an SiO₂/Na₂O molar ratio of from 2 to 4.

3. The method of preparing an aqueous silica sol as claimed in claim 1, in which the salt of strong acid in step (a) is sulfate, nitrate, hydrochloride, sulfamate or formate of Na, K, Li, Cs, NH₄, a quarternary ammonium or an amine.

4. The method of preparing an aqueous silica sol as claimed in claim 1, in which the alkali metal silicate is dissolved into an aqueous solution of a salt of a strong acid so that the aqueous solution of the alkali metal silicate in step (a) is obtained.

5. The method of preparing an aqueous silica sol as claimed in claim 1, in which the alkali metal silicate is dissolved into an aqueous solution having a concentration of from 0.02 to 20 % by weight of nitrate of Na, K, Li or NH₄ in step (a).

6. The method of preparing an aqueous silica sol as claimed in claim 1, in which the aqueous solution of sodium or potassium hydroxide in step (d) has a concentration of from 2 to 20 % by weight of the hydroxide.

7. The method of preparing an aqueous silica sol as claimed in claim 1, in which the ammonia in step (g) is added as an aqueous solution of ammonia having a concentration of from 5 to 30 % by weight of the ammonia.

8. A method of preparing a stable aqueous silica sol which has an SiO₂ concentration of from 30 to 50 % by weight, which is substantially free from any other polyvalent metal oxides than silica and in which the particle of colloidal silica have a mean particle size of from 10 to 30 millimicrons, comprising the steps (a), (b), (c), (d), (e), (f) and (g) :
(a) a step where an aqueous solution of an alkali metal silicate having a concentration of from 1 to 6 % by weight of SiO₂ of the silicate and a concentration of from 100 to 10000 ppm by weight of a strong acid is prepared by dissolving a strong acid and an alkali metal silicate containing other polyvalent metal oxides than silica in an amount of from 300 to 3000 ppm by weight to the silica of the silicate into water,
(b) a step where the aqueous solution obtained in step (a) is passed through a column filled with a cation-exchange resin in the hydrogen form in such an amount as being sufficient for ion-exchanging all the metal ions in the aqueous solution at a space velocity of from 0.1 to 10 per hour while maintaining a temperature of from 0 to 60°C of the solution inside the column throughout the passing,
(c) a step where the aqueous solution obtained in step (b) is passed through a column filled with an anion-exchange resin in the hydroxyl form in such an amount as being sufficient for ion-exchanging all the anions in the aqueous solution at a space velocity of from 1 to 10 per hour while maintaining a temperature of from 0 to 60°C of the solution inside the column throughout the passing,
(d) a step where an aqueous solution of sodium or potassium hydroxide is added to the aqueous solution obtained in step (c) in a molar ratio of one mol of Na₂O or K₂O in the aqueous solution of the hydroxide to from 60 to 200 moles of SiO₂ contained in the aqueous solution obtained in step (c) while maintaining atemperature of from 0 to 60°C of the resulted solution throughout the adding,
(e) a step where from 5 to 40 parts by weight of the solution obtained in step (d) is continuously fed into 1 part by weight of the solution obtained in step (d) in a container for a period of from 50 to 200 hours while maintaining a temperature of from 70 to 100°C of the liquid under normal or reduced pressure in the container to evaporate water in the liquid and removing the evaporated water from the container so that the volume of the liquid in the container may be constant throughout the feeding, thereby to form a stable aqueous sol of colloidal silica having a mean particle size of from 10 to 30 millimicrons in an SiO₂ concentration of from 30 to 50 % by weight,
(f) a step where the sol obtained in step (e) is passed through a column filled with a cation-exchange resin in the hydrogen form in such an amount as being sufficient for ion-exchanging all the metal ions in the sol at a space velocity of from 2 to 20 per hour while maintaining a temperature of from 0 to 60°C of the sol inside the column throughout the passing,
(g) a step where ammonia is added to the sol obtained in step (f) in an amount to give a pH value of from 8 to 10.5 to the sol at a temperature of from 0 to 100 °C of the sol.

9. The method of preparing an aqueous silica sol as claimed in claim 8, in which the alkali metal silicate in step (a) is a sodium water glass having an SiO₂/Na₂O molar ratio of from 2 to 4.

10. The method of preparing an aqueous silica sol as claimed in claim 8, in which the strong acid in step (a) is sulfuric, nitric, hydrochloric, sulfamic or formic acid.

11. The method of preparing an aqueous silica sol as claimed in claim 8, in which the alkali metal silicate is dissolved into an aqueous solution of the strong acid so that an aqueous solution of the silicate in step (a) is obtained.

12. The method of preparing an aqueous silica sol as claimed in claim 8, in which the alkali metal silicate is dissolved into an aqueous solution having a concentration of from 0.015 to 15 % by weight of sulfuric, hydrochloric or nitric acid in step (a).

13. The method of preparing an aqueous silica sol as claimed in claim 8, in which the alkali metal silicate is dissolved into an aqueous solution having a concentration of from 0.015 to 15 % by weight of nitric acid in step (a) .

14. The method of preparing an aqueous silica sol as claimed in claim 8, in which the aqueous solution of sodium or potassium hydroxide in step (d) has a concentration of from 2 to 20 % by weight of the hydroxide.

15. The method of preparing an aqueous silica sol as claimed in claim 8, in which the ammonia in step (g) is added as an aqueous solution of ammonia having a concentration of from 5 to 30 % by weight of the ammonia.

16. A method of preparing a stable aqueous silica sol which has an SiO₂ concentration of from 30 to 50 % by weight, which is substantially free from any other polyvalent metal oxides than silica and in which the particle of colloidal silica have a mean particle size of from 10 to 30 millimicrons, comprising the steps (a), (b), (c), (d), (e), (f) and (g) :
(a) a step where an aqueous solution of an alkali metal silicate having a concentration of from 1 to 6 % by weight of SiO₂ of the silicate and containing other polyvalent metal oxides than silica in an amount of from 300 to 3000 ppm by weight to the silica of the silicate is passed through a column filled with a cation-exchange resin in the hydrogen form in such an amount as being sufficient for ion-exchanging all the metal ions in the aqueous solution at a space velocity of from 1 to 10 per hour while maintaining a temperature of from 0 to 60°C of the solution inside the column throughout the passing, and then a strong acid in an amount of from 100 to 10000 ppm by weight to the effluent from the column is added to said effluent,
(b) a step where an aqueous solution containing the strong acid obtained in step (a) is passed through a column filled with a cation-exchange resin in the hydrogen form in such an amount as being sufficient for ion-exchanging all the metal ions in the aqueous solution at a space velocity of from 0.1 to 10 per hour while maintaining a temperature of from 0 to 60°C of the solution inside the column throughout the passing,
(c) a step where the aqueous solution obtained in step (b) is passed through a column filled with an anion-exchange resin in the hydroxyl form in such an amount as being sufficient for ion-exchanging all the anions in the aqueous solution at a space velocity of from 1 to 10 per hour while maintaining a temperature of from 0 to 60°C of the solution inside the column throughout the passing,
(d) a step where an aqueous solution of sodium or potassium hydroxide is added to the aqueous solution obtained in step (c) in a molar ratio of one mol of Na₂O or K₂O in the aqueous solution of the hydroxide to from 60 to 200 moles of SiO₂ contained in the aqueous solution obtained in step (c) while maintaining a temperature of from 0 to 60 °C of the resulted solution throughout the adding,
(e) a step where from 5 to 40 parts by weight of the solution obtained in step (d) is continuously fed into 1 part by weight of the solution obtained in step (d) in a container for a period of from 50 to 200 hours while maintaining a temperature of from 70 to 100°C of the liquid under normal or reduced pressure in the container to evaporate water in the liquid and removing the evaporated water from the container so that the volume of the liquid in the container may be constant throughout the feeding, thereby to form a stable aqueous sol of colloidal silica having a mean particle size of from 10 to 30 millimicrons in an SiO₂ concentration of from 30 to 50 % by weight,
(f) a step where the sol obtained in step (e) is passed through a column filled with a cation-exchange resin in the hydrogen form in such an amount as being sufficient for ion-exchanging all the metal ions in the sol at a space velocity of from 2 to 20 per hour while maintaining a temperature of from 0 to 60°C of the sol inside the column throughout the passing,
(g) a step where ammonia is added to the sol obtained in step (f) in an amount to give a pH value of from 8 to 10.5 to the sol at a temperature of from 0 to 100 °C of the sol.

17. The method of preparing an aqueous silica sol as claimed in claim 16, in which the alkali metal silicate in step (a) is a sodium water glass having an SiO₂/Na₂O molar ratio of from 2 to 4.

18. The method of preparing an aqueous silica sol as claimed in claim 16, in which the strong acid in step (a) is sulfuric, nitric, hydrochloric, sulfamic, or formic acid.

19. The method of preparing an aqueous silica sol as claimed in claim 16, in which the strong acid in step (a) is an aqueous solution having a concentration of from 10 to 100 % by weight of sulfuric, nitric or hydrochloric acid.

20. The method of preparing an aqueous silica sol as claimed in claim 16, in which the strong acid in step (a) is an aqueous solution having a concentration of from 10 to 100 % by weight of nitric acid.

21. The method of preparing an aqueous silica sol as claimed in claim 16, in which the aqueous solution of sodium or potassium hydroxide in step (d) has a concentration of from 2 to 20 % by weight of the hydroxide.

22. The method of preparing an aqueous silica sol as claimed in claim 16, in which the ammonia in step (g) is added as an aqueous solution of ammonia having a concentration of from 5 to 30 % by weight of the ammonia.

23. A method of preparing an aqueous solution of active silicic acid which has an SiO₂ concentration of from 1 to 6 % by weight and which is substantially free from any other polyvalent metal oxides than silica, comprising the steps (a), (b) and (c) :
(a) a step where an aqueous solution of an alkali metal silicate having a concentration of from 1 to 6 % by weight of SiO₂ of the silicate and a concentration of from 150 to 15000 ppm by weight of a salt of a strong acid is prepared by dissolving a salt of a strong acid and an alkali metal silicate containing other polyvalent metal oxides than silica in an amount of from 300 to 3000 ppm by weight to the silica of the silicate into water,
(b) a step where the aqueous solution obtained in step (a) is passed through a column filled with a cation-exchange resin in the hydrogen form in such an amount as being sufficient for ion-exchanging all the metal ions in the aqueous solution at a space velocity of from 0.1 to 10 per hour while maintaining a temperature of from 0 to 60°C of the solution inside the column throughout the passing, and
(c) a step where the aqueous solution obtained in step (b) is passed through a column filled with an anion-exchange resin in the hydroxyl form in such an amount as being sufficient for ion-exchanging all the anions in the aqueous solution at a space velocity of from 1 to 10 per hour while maintaining a temperature of from 0 to 60°C of the solution inside the column throughout the passing.

24. The method of preparing an aqueous solution of active silicic acid as claimed in claim 23, in which the alkali metal silicate in step (a) is a sodium water glass having an SiO₂/Na₂O molar ratio of from 2 to 4.

25. The method of preparing an aqueous solution of active silicic acid as claimed in claim 23, in which the salt of a strong acid in step (a) is sulfate, nitrate, hydrochloride, sulfamate or formate of Na, K, Li, Cs, NH₄, a quarternary ammonium or an amine.

26. The method of preparing an aqueous solution of active silicic acid as claimed in claim 23, in which the alkali metal silicate is dissolved into an aqueous solution of a salt of a strong acid so that the aqueous solution of the alkali metal silicate in step (a) is obtained.

27. The method of preparing an aqueous solution of active silicic acid as claimed in claim 23, in which the alkali metal silicate is dissolved into an aqueous solution having a concentration of from 0.02 to 20 % by weight of nitrate of Na, K, Li or NH₄ in step (a).

28. A method of preparing an aqueous solution of active silicic acid which has an SiO₂ concentration of from 1 to 6 % by weight and which is substancially free from any other polyvalent metal oxides than silica, comprising the steps (a), (b) and (c) :
(a) a step where an aqueous solution of an alkali metal silicate having a concentration of from 1 to 6 % by weight of SiO₂ of the silicate and a concentration of from 150 to 15000 ppm by weight of a salt of a strong acid is prepared by dissolving a strong acid and an alkali metal silicate containing other polyvalent metal oxides than silica in an amount of from 300 to 3000 ppm by weight to the silica of the silicate into water,
(b) a step where the aqueous solution obtained in step (a) is passed through a column filled with a cation-exchange resin in the hydrogen form in such an amount as being sufficient for ion-exchanging all the metal ions in the aqueous solution at a space velocity of from 0.1 to 10 per hour while maintaining a temperature of from 0 to 60°C of the solution inside the column throughout the passing, and
(c) a step where the aqueous solution obtained in step (b) is passed through a column filled with an anion-exchange resin in the hydroxyl form in such an amount as being sufficient for ion-exchanging all the anions in the aqueous solution at a space velocity of from 1 to 10 per hour while maintaining a temperature of from 0 to 60°C of the solution inside the column throughout the passing.

29. The method of preparing an aqueous solution of active silicic acid as claimed in claim 28, in which the alkali metal silicate in step (a) is a sodium water glass having an SiO₂/Na₂O molar ratio of from 2 to 4.

30. The method of preparing an aqueous solution of active silicic acid as claimed in claime 28, in which the strong acid in step (a) is sulfuric, nitric, hydrochloric, sulfamic, or formic acid.

31. The method of preparing an aqueous solution of active silicic acid as claimed in claim 28, in which the alkali metal silicate is dissolved into an aqueous solution of a strong acid so that the aqueous solution of the alkali metal silicate in step(a) is obtained.

32. The method of preparing an aqueous solution of active silicic acid as claimed in claim 28, in which the strong acid in step (a) is an aqueous solution having a concentration of from 0.015 to 15 % by weight of sulfuric, nitric or hydrochloric acid.

33. The method of preparing an aqueous solution of active silicic acid as claimed in claim 28, in which the strong acid in step (a) is an aqueous solution having a concentration of from 0.015 to 15 % by weight of nitric acid.

34. A method of preparing an aqueous solution of active silicic acid which has an SiO₂ concentration of from 1 to 6 % by weight and which is substantially free from any other polyvalent metal oxides than silica, comprising the steps (a), (b) and (c) :
(a) a step where an aqueous solution of an alkali metal silicate having a concentration of from 1 to 6 % by weight of SiO₂ of the silicate and containing other polyvalent metal oxides than silica in an amount of from 300 to 3000 ppm by weight to the silica of the silicate is passed through a column filled with a cation-exchange resin in the hydrogen form in such an amount as being sufficient for ion-exchanging all the metal ions in the aqueous solution at a space velocity of from 1 to 10 per hour while maintaining a temperature of from 0 to 60°C of the solution inside the column throughout the passing, and then a strong acid in an amount of from 100 to 10000 ppm by weight to the effluent from the column is added to said effluent,
(b) a step where an aqueous solution containing the strong acid obtained in step (a) is passed through a column filled with a cation-exchange resin in the hydrogen form in such an amount as being sufficient for ion-exchanging all the metal ions in the aqueous solution at a space velocity of from 0.1 to 10 per hour while maintaining a temperature of from 0 to 60°C of the solution inside the column throughout the passing, and
(c) a step where the aqueous solution obtained in step (b) is passed through a column filled with an anion-exchange resin in the hydroxyl form in such an amount as being sufficient for ion-exchanging all the anions in the aqueous solution at a space velocity of from 1 to 10 per hour while maintaining a temperature of from 0 to 60°C of the solution inside the column throughout the passing.

35. The method of preparing an aqueous solution of active silicic acid as claimed in claim 34, in which the alkali metal silicate in step (a) is a sodium water glass having an SiO₂/Na₂O molar ratio of from 2 to 4.

36. The method of preparing an aqueous solution of active silicic acid as claimed in claim 34, in which the strong acid in step (a) is sulfuric, nitric, hydrochloric, sulfamic, or formic acid.

37. The method of preparing an aqueous solution of active silicic acid as claimed in claim 34, in which the strong acid in step (a) is an aqueous solution having a concentration of from 10 to 100 % by weight of sulfuric, nitric or hydrochloric acid.

38. The method of preparing an aqueous solution of active silicic acid as claimed in claim 34, in which the strong acid in step (a) is an aqueous solution having a concentration of from 10 to 100 % by weight of nitric acid.

39. A method of preparing a stable aqueous silica sol which has an SiO₂ concentration of from 30 to 50 % by weight, which is substantially free from any other polyvalent metal oxides than silica and in which the particle of colloidal silica have a mean particle size of from 10 to 30 millimicrons, comprising the steps (1), (2) , (3), (4), (5), (6) and (7) :
(1) a step where an aqueous solution of an alkali metal silicate having a concentration of from 1 to 6 % by weight of SiO₂ of the silicate and a concentration of from 150 to 750 ppm by weight of a salt of a strong acid is prepared by dissolving a salt of a strong acid and an alkali metal silicate containing other polyvalent metal oxides than silica in an amount of from 300 to 1500 ppm by weight to the silica of the silicate into water,
(2) a step where the aqueous solution obtained in step (1) is passed through a column filled with a cation-exchange resin in the hydrogen form in such an amount as being sufficient for ion-exchanging all the metal ions in the aqueous solution at a space velocity of from 0.1 to 10 per hour while maintaining a temperature of from 0 to 60°C of the solution inside the column throughout the passing,
(3) a step where an aqueous solution of sodium or potassium hydroxide is added to the aqueous solution obtained in step (2) in a molar ratio of one mol of Na₂O or K₂O in the aqueous solution of the hydroxide to from 60 to 200 moles of SiO₂ contained in the aqueous solution obtained in step (2) while maintaining a temperature of from 0 to 60 °C of the resulted solution throughout the adding,
(4) a step where from 5 to 20 parts by weight of the solution obtained in step (3) is continuously fed into 1 part by weight of the solution obtained in step (3) in a container for a period of from 50 to 200 hours while maintaining a temperature of from 70 to 100°C of the liquid under normal or reduced pressure in the container to evaporate water in the liquid and removing the evaporated water from the container so that the volume of the liquid in the container may be constant throughout the feeding, thereby to form a stable aqueous sol of colloidal silica having a mean particle size of from 10 to 30 millimicrons in an SiO₂ concentration of from 30 to 50 % by weight,
(5) a step where the sol obtained in step (4) is passed through a column filled with a cation-exchange resin in the hydrogen form in such an amount as being sufficient for ion-exchanging all the metal ions in the sol at a space velocity of from 2 to 20 per hour while maintaining a temperature of from 0 to 60°C of the sol inside the column throughout the passing,
(6) a step where the sol obtained in step (5) is passed through a column filled with an anion-exchange resin in the hydroxyl form in such an amount as being sufficient for ion-exchanging all the anions in the sol at a space velocity of from 1 to 10 per hour while maintaining a temperature of from 0 to 60°C of the sol inside the column throughout the passing,
(7) a step where ammonia is added to the sol obtained in step (6) in an amount to give a pH value of from 8 to 10.5 to the sol at a temperature of from 0 to 100 °C of the sol.

40. The method of preparing an aqueous silica sol as claimed in claime 39, in which the alkali metal silicate in step (1) is a sodium water glass having an SiO₂/Na₂O molar ratio of from 2 to 4.

41. The method of preparing an aqueous silica sol as claimed in claim 39, in which the salt of strong acid in step (1) is sulfate, nitrate, hydrochloride, sulfamate or formate of Na, K, Li, Cs, NH₄, a quarternary ammonium or an amine.

42. The method of preparing an aqueous silica sol as claimed in claim 39, in which the alkali metal silicate is dissolved into an aqueous solution of a salt of a strong acid so that the aqueous solution of the alkali metal silicate in step (1) is obtained.

43. The method of preparing an aqueous silica sol as claimed in claim 39, in which the alkali metal silicate is dissolved into an aqueous solution having a concentration of from 0.02 to 20 % by weight of nitrate of Na, K, Li or NH₄ in step (1).

44. The method of preparing an aqueous silica sol as claimed in claim 39, in which the aqueous solution of sodium or potassium hydroxide in step (3) has a concentration of from 2 to 20 % by weight of the hydroxide.

45. The method of preparing an aqueous silica sol as claimed in claim 39, in which the ammonia in step (7) is added as an aqueous solution of ammonia having a concentration of from 5 to 30 % by weight of the ammonia.

46. A method of preparing a stable aqueous silica sol which has an SiO₂ concentration of from 30 to 50 % by weight, which is substantially free from any other polyvalent metal oxides than silica and in which the particle of colloidal silica have a mean particle size of from 10 to 30 millimicrons, comprising the steps (1), (2) , (3), (4), (5), (6) and (7) :
(1) a step where an aqueous solution of an alkali metal silicate having a concentration of from 1 to 6 % by weight of SiO₂ of the silicate and a concentration of from 100 to 500 ppm by weight of a strong acid is prepared by dissolving a strong acid and an alkali metal silicate containing other polyvalent metal oxides than silica in an amount of from 300 to 1500 ppm by weight to the silica of the silicate into water,
(2) a step where the aqueous solution obtained in step (1) is passed through a column filled with a cation-exchange resin in the hydrogen form in such an amount as being sufficient for ion-exchanging all the metal ions in the aqueous solution at a space velocity of from 0.1 to 10 per hour while maintaining a temperature of from 0 to 60°C of the solution inside the column throughout the passing,
(3) a step where an aqueous solution of sodium or potassium hydroxide is added to the aqueous solution obtained in step (2) in a molar ratio of one mol of Na₂O or K₂O in the aqueous solution of the hydroxide to from 60 to 200 moles of SiO₂ contained in the aqueous solution obtained in step (2) while maintaining a temperature of from 0 to 60 °C of the resulted solution throughout the adding,
(4) a step where from 5 to 20 parts by weight of the solution obtained in step (3) is continuously fed into 1 part by weight of the solution obtained in step (3) in a container for a period of from 50 to 200 hours while maintaining a temperature of from 70 to 100°C of the liquid under normal or reduced pressure in the container to evaporate water in the liquid and removing the evaporated water from the container so that the volume of the liquid in the container may be constant throughout the feeding, thereby to form a stable aqueous sol of colloidal silica having a mean particle size of from 10 to 30 millimicrons in an SiO₂ concentration of from 30 to 50 % by weight,
(5) a step where the sol obtained in step (4) is passed through a column filled with a cation-exchange resin in the hydrogen form in such an amount as being sufficient for ion-exchanging all the metal ions in the sol at a space velocity of from 2 to 20 per hour while maintaining a temperature of from 0 to 60°C of the sol inside the column throughout the passing,
(6) a step where the sol obtained in step (5) is passed through a column filled with an anion-exchange resin in the hydroxyl form in such an amount as being sufficient for ion-exchanging all the anions in the sol at a space velocity of from 1 to 10 per hour while maintaining a temperature of from 0 to 60°C of the sol inside the column throughout the passing,
(7) a step where ammonia is added to the sol obtained in step (6) in an amount to give a pH value of from 8 to 10.5 to the sol at a temperature of from 0 to 100 °C of the sol.

47. The method of preparing an aqueous silica sol as claimed in claim 46, in which the alkali metal silicate in step (1) is a sodium water glass having an SiO₂/Na₂O molar ratio of from 2 to 4.

48. The method of preparing an aqueous silica sol as claimed in claim 46, in which the strong acid in step (1) is sulfuric, nitric, hydrochloric, sulfamic or formic acid.

49. The method of preparing an aqueous silica sol as claimed in claim 46, in which the alkali metal silicate is dissolved into an aqueous solution of the strong acid so that an aqueous solution of the silicate in step (1) is obtained.

50. The method of preparing an aqueous silica sol as claimed in claim 46, in which the alkali metal silicate is dissolved into an aqueous solution having a concentration of from 0.015 to 15 % by weight of sulfuric, hydrochloric or nitric acid in step (1).

51. The method of preparing an aqueous silica sol as claimed in claim 46, in which the alkali metal silicate is dissolved into an aqueous solution having a concentration of from 0.015 to 15 % by weight of nitric acid in step (1).

52. The method of preparing an aqueous silica sol as claimed in claim 46, in which the aqueous solution of sodium or potassium hydroxide in step (3) has a concentration of from 2 to 20 % by weight of the hydroxide.

53. The method of preparing an aqueous silica sol as claimed in claim 46, in which the ammonia in step (7) is added as an aqueous solution of ammonia having a concentration of from 5 to 30 % by weight of the ammonia.

54. A method of preparing a stable aqueous silica sol which has an SiO₂ concentration of from 30 to 50 % by weight, which is substantially free from any other polyvalent metal oxides than silica and in which the particle of colloidal silica have a mean particle size of from 10 to 30 millimicrons, comprising the steps (1), (2) , (3), (4), (5), (6) and (7) :
(1) a step where an aqueous solution of an alkali metal silicate having a concentration of from 1 to 6 % by weight of SiO₂ of the silicate and containing other polyvalent metal oxides than silica in an amount of from 300 to 1500 ppm by weight to the silica of the silicate is passed through a column filled with a cation-exchange resin in the hydrogen form in such an amount as being sufficient for ion-exchanging all the metal ions in the aqueous solution at a space velocity of from 1 to 10 per hour while maintaining a temperature of from 0 to 60 °C of the solution inside the column throughout the passing, and then a strong acid in an amount of from 100 to 500 ppm by weight to the effluent from the column is added to said effluent,
(2) a step where an aqueous solution containing the strong acid obtained in step (1) is passed through a column filled with a cation-exchange resin in the hydrogen form in such an amount as being sufficient for ion-exchanging all the metal ions in the aqueous solution at a space velocity of from 0.1 to 10 per hour while maintaining a temperature of from 0 to 60°C of the solution inside the column throughout the passing,
(3) a step where an aqueous solution of sodium or potassium hydroxide is added to the aqueous solution obtained in step (2) in a molar ratio of one mol of Na₂O or K₂O in the aqueous solution of the hydroxide to from 60 to 200 moles of SiO₂ contained in the aqueous solution obtained in step (2) while maintaining a temperature of from 0 to 60 °C of the resulted solution throughout the adding,
(4) a step where from 5 to 20 parts by weight of the solution obtained in step (3) is continuously fed into 1 part by weight of the solution obtained in step (3) in a container for a period of from 50 to 200 hours while maintaining a temperature of from 70 to 100 °C of the liquid under normal or reduced pressure in the container to evaporate water in the liquid and removing the evaporated water from the container so that the volume of the liquid in the container may be constant throughout the feeding, thereby to form a stable aqueous sol of colloidal silica having a mean particle size of from 10 to 30 millimicrons in an SiO₂ concentration of from 30 to 50 % by weight,
(5) a step where the sol obtained in step (4) is passed through a column filled with a cation-exchange resin in the hydrogen form in such an amount as being sufficient for ion-exchanging all the metal ions in the sol at a space velocity of from 2 to 20 per hour while maintaining a temperature of from 0 to 60 °C of the sol inside the column throughout the passing,
(6) a step where the sol obtained in step (5) is passed through a column filled with an anion-exchange resin in the hydroxyl form in such an amount as being sufficient for ion-exchanging all the anions in the sol at a space velocity of from 1 to 10 per hour while maintaining a temperature of from 0 to 60 °C of the sol inside the column throughout the passing,
(7) a step where ammonia is added to the sol obtained in step (6) in an amount to give a pH value of from 8 to 10.5 to the sol at a temperature of from 0 to 100 °C of the sol.

55. The method of preparing an aqueous silica sol as claimed in claim 54, in which the alkali metal silicate in step (1) is a sodium water glass having an SiO₂/Na₂O molar ratio of from 2 to 4.

56. The method of preparing an aqueous silica sol as claimed in claim 54, in which the strong acid in step (1) is sulfuric, nitric, hydrochloric, sulfamic or formic acid.

57. The method of preparing an aqueous silica sol as claimed in claim 54, in which the strong acid in step (1) is an aqueous solution having a concentration of from 10 to 100 % by weight of sulfuric, nitric or hydrochloric acid.

58. The method of preparing an aqueous silica sol as claimed in claim 54, in which the strong acid in step (1) is an aqueous solution having a concentration of from 10 to 100 % by weight of nitric acid.

59. The method of preparing an aqueous silica sol as claimed in claim 54, in which the aqueous solution of sodium or potassium hydroxide in step (3) has a concentration of from 2 to 20 % by weight of the hydroxide.

60. The method of preparing an aqueous silica sol as claimed in claim 54, in which the ammonia in step (7) is added as an aqueous solution of ammonia having a concentration of from 5 to 30 % by weight of the ammonia.

## Patentansprüche

1. Verfahren zur Herstellung eines stabilen wäßrigen Kieselsäuresols, das eine SiO₂-Konzentration zwischen 30 und 50 Gew.-% hat, das im wesentlichen von irgendwelchen anderen mehrwertigen Metalloxiden als Siliciumdioxid frei ist und in dem die Partikel aus kolloidalem Siliciumdioxid eine durchschnittliche Partikelgröße zwischen 10 und 30 nm haben, umfassend die Schritte (a), (b), (c), (d), (e), (f) und (g):
(a) ein Schritt, in dem eine wäßrige Lösung eines Alkalimetallsilicats, die eine Konzentration an SiO₂ des Silicats von 1 bis 6 Gew.-% und eine Konzentration eines Salzes einer starken Säure von 150 bis 15000 Gewichts-ppm hat, durch Auflösen eines Salzes einer starken Säure und eines Alkalimetallsilicates, das andere mehrwertige Metalloxide als Siliciumdioxid in einer Menge von 300 bis 3000 Gewichts-ppm, bezogen auf das Siliciumdioxid des Silicats, enthält, in Wasser hergestellt wird;
(b) ein Schritt, in dem die in Schritt (a) erhaltene wäßrige Lösung mit einer Raumgeschwindigkeit von 0,1 bis 10 pro Stunde durch eine Säule, die in einer solchen Menge mit einem Kationen-Austauscherharz in der Wasserstoff-Form gefüllt ist, wie sie zum Ionenaustausch aller Metallionen in der wäßrigen Lösung ausreichend ist, geleitet wird, während die Lösung im Inneren der Säule während des Durchleitens bei einer Temperatur zwischen 0 und 60°C gehalten wird;
(c) ein Schritt, in dem die in Schritt (b) erhaltene Lösung mit einer Raumgeschwindigkeit von 1 bis 10 pro Stunde durch eine Säule, die mit einem Anionen-Austauscherharz in der Hydroxyl-Form in einer solchen Menge, wie sie für einen Ionenaustausch aller Anionen in der wäßrigen Lösung ausreichend ist, gefüllt ist, geleitet wird, während die Lösung im Inneren der Säule während des Durchleitens bei einer Temperatur zwischen 0 und 60°C gehalten wird;
(d) ein Schritt, in dem eine wäßrige Lösung von Natrium- oder Kaliumhydroxid der in Schritt (c) erhaltenen wäßrigen Lösung in einem Molverhältnis von 1 mol Na₂O oder K₂O in der wäßrigen Lösung des Hydroxids zu 60 bis 200 mol SiO₂, das in der in Schritt (c) erhaltenen wäßrigen Lösung enthalten ist, zugesetzt wird, wobei die resultierende Lösung während des Zusetzens bei einer Temperatur zwischen 0 und 60°C gehalten wird;
(e) ein Schritt, in dem 5 bis 40 Gew.-Teile der in Schritt (d) erhaltenen Lösung kontinuierlich zu 1 Gew.-Teil der in Schritt (d) erhaltenen Lösung in einem Behälter über einen Zeitraum von 50 bis 200 Stunden geführt werden, während die Temperatur der Flüssigkeit zwischen 70 und 100°C bei normalem bis reduziertem Druck in dem Behälter gehalten wird, um Wasser in der Flüssigkeit zu verdampfen, und das verdampfte Wasser aus dem Behälter so entfernt wird, daß das Volumen der Flüssigkeit in dem Behälter während des ganzen Zuführens konstant sein kann, wodurch ein stabiles wäßriges Sol aus kolloidalem Siliciumdioxid, das eine durchschnittliche Partikelgröße zwischen 10 und 30 nm hat, mit einer SiO₂-Konzentration zwischen 30 und 50 Gew.-% gebildet wird;
(f) ein Schritt, in dem das in Schritt (e) erhaltene Sol mit einer Raumgeschwindigkeit von 2 bis 20 pro Stunde durch eine Säule, die mit einem Kationen-Austauscherharz in der Wasserstoff-Form in einer Menge gefüllt ist, wie sie zum Ionenaustausch aller Metallionen in dem Sol ausreichend ist, geleitet wird, während das Sol im Inneren der Säule während des gesamten Durchleitens bei einer Temperatur zwischen 0 und 60°C gehalten wird;
(g) ein Schritt, in dem dem in Schritt (f) erhaltenen Sol Ammoniak in einer Menge zugesetzt wird, daß bei einer Temperatur des Sols zwischen 0 und 100°C ein pH-Wert des Sols zwischen 8 und 10,5 erreicht wird.

2. Verfahren zur Herstellung eines stabilen wäßrigen Kieselsäuresols nach Anspruch 1, in dem das Alkalimetallsilicat in Schritt (a) Natriumwasserglas, das ein Molverhältnis SiO₂/Na₂O von 2 bis 4 hat, ist.

3. Verfahren zur Herstellung eines stabilen wäßrigen Kieselsäuresols nach Anspruch 1, in dem das Salz einer starken Säure in Schritt (a) Sulfat, Nitrat, Hydrochlorid, Sulfamat oder Formiat von Na, K, Li, Cs, NH₄, einem quaternärem Ammonium oder Amin ist.

4. Verfahren zur Herstellung eines stabilen wäßrigen Kieselsäuresols nach Anspruch 1, in dem das Alkalimetallsilicat in einer wäßrigen Lösung eines Salzes einer starken Säure aufgelöst wird, so daß die wäßrige Lösung des Alkalimetallsilcats in Schritt (a) erhalten wird.

5. Verfahren zur Herstellung eines stabilen wäßrigen Kieselsäuresols nach Anspruch 1, in dem das Alkalimetallsilicat in Schritt (a) in einer wäßrigen Lösung, die eine Konzentration zwischen 0,02 und 20 Gew.-% Nitrat von Na, K, Li oder NH₄ hat, aufgelöst wird.

6. Verfahren zur Herstellung eines stabilen wäßrigen Kieselsäuresols nach Anspruch 1, in dem die wäßrige Lösung von Natrium- oder Kaliumhydroxid in Schritt (d) eine Konzentration des Hydroxids zwischen 2 und 20 Gew.-% hat.

7. Verfahren zur Herstellung eines stabilen wäßrigen Kieselsäuresols nach Anspruch 1, in dem das Ammoniak in Schritt (g) als wäßrige Ammoniak-Lösung, die eine Konzentration zwischen 5 und 30 Gew.-% Ammoniak hat, zugesetzt wird.

8. Verfahren zur Herstellung eines stabilen wäßrigen Kieselsäuresols, das eine SiO₂-Konzentration zwischen 30 und 50 Gew.-% hat, das im wesentlichen von irgendwelchen anderen mehrwertigen Metalloxiden als Siliciumdioxid frei ist, und in dem die Partikel aus kolloidalem Siliciumdioxid eine durchschnittliche Partikelgröße zwischen 10 und 30 nm haben, umfassend die Schritte (a), (b), (c), (d), (e), (f) und (g):
(a) ein Schritt, in dem eine wäßrige Lösung eines Alkalimetallsilicates, die eine Konzentration an SiO₂ im Silicats von 1 bis 6 Gew.-% und eine Konzentration einer starken Säure von 100 bis 10 000 Gewichts-ppm hat, durch Auflösen einer starken Säure und eines Alkalimetallsilicates, das andere mehrwertige Metalloxide als Siliciumdioxid in einer Menge von 300 bis 3000 Gewichts-ppm, bezogen auf das Siliciumdioxid des Silicats, enthält, in Wasser hergestellt wird;
(b) ein Schritt, in dem die in Schritt (a) erhaltene wäßrige Lösung mit einer Raumgeschwindigkeit von 0,1 bis 10 pro Stunde durch eine Säule, die in einer solchen Menge mit einem Kationen-Austauscherharz in der Wasserstoff-Form gefüllt ist, wie sie zum Ionenaustausch aller Metallionen in der wäßrigen Lösung ausreichend ist, geleitet wird, während die Lösung im Inneren der Säule während des Durchleitens bei einer Temperatur zwischen 0 und 60°C gehalten wird;
(c) ein Schritt, in dem die in Schritt (b) erhaltene Lösung mit einer Raumgeschwindigkeit von 1 bis 10 pro Stunde durch eine Säule, die mit einem Anionen-Austauscherharz in der Hydroxyl-Form in einer solchen Menge, wie sie für einen Ionenaustausch aller Anionen in der wäßrigen Lösung ausreichend ist, gefüllt ist, geleitet wird, während die Lösung im Inneren der Säule während des Durchleitens bei einer Temperatur zwischen 0 und 60°C gehalten wird;
(d) ein Schritt, in dem eine wäßrige Lösung von Natrium- oder Kaliumhydroxid der in Schritt (c) erhaltenen wäßrigen Lösung in einem Molverhältnis von 1 mol Na₂O oder K₂O in der wäßrigen Lösung des Hydroxids zu 60 bis 200 mol SiO₂, das in der in Schritt (c) erhaltenen wäßrigen Lösung enthalten ist, zugesetzt wird, wobei die resultierende Lösung während des Zusetzens bei einer Temperatur zwischen 0 und 60°C gehalten wird;
(e) ein Schritt, in dem 5 bis 40 Gew.-Teile der in Schritt (d) erhaltenen Lösung kontinuierlich zu 1 Gew.-Teil der in Schritt (d) erhaltenen Lösung in einem Behälter über einen Zeitraum von 50 bis 200 Stunden geführt werden, während die Temperatur der Flüssigkeit zwischen 70 und 100°C bei normalem bis reduziertem Druck in dem Behälter gehalten wird, um Wasser in der Flüssigkeit zu verdampfen, und das verdampfte Wasser aus dem Behälter so entfernt wird, daß das Volumen der Flüssigkeit in dem Behälter während des ganzen Zuführens konstant sein kann, wodurch ein stabiles wäßriges Sol aus kolloidalem Siliciumdioxid, das eine durchschnittliche Partikelgröße zwischen 10 und 30 nm hat, mit einer SiO₂-Konzentration zwischen 30 und 50 Gew.-% gebildet wird;
(f) ein Schritt, in dem das in Schritt (e) erhaltene Sol mit einer Raumgeschwindigkeit von 2 bis 20 pro Stunde durch eine Säule, die mit einem Kationen-Austauscherharz in der Wasserstoff-Form in einer Menge gefüllt ist, wie sie zum Ionenaustausch aller Metallionen in dem Sol ausreichend ist, geleitet wird, während das Sol im Inneren der Säule während des gesamten Durchleitens bei einer Temperatur zwischen 0 und 60°C gehalten wird;
(g) ein Schritt, in dem dem in Schritt (f) erhaltenen Sol Ammoniak in einer Menge zugesetzt wird, daß bei einer Temperatur des Sols zwischen 0 und 100°C ein pH-Wert des Sols zwischen 8 und 10,5 erreicht wird.

9. Verfahren zur Herstellung eines stabilen wäßrigen Kieselsäuresols nach Anspruch 8, in dem das Alkalimetallsilicat in Schritt (a) ein Natriumwasserglas ist, das ein Molverhältnis SiO₂/Na₂O von 2 bis 4 hat.

10. Verfahren zur Herstellung eines stabilen wäßrigen Kieselsäuresols nach Anspruch 8, in dem die starke Säure in Schritt (a) Schwefelsäure, Salpetersäure, Salzsäure, Sulfaminsäure oder Ameisensäure ist.

11. Verfahren zur Herstellung eines wäßrigen Kieselsäuresols nach Anspruch 8, in dem das Alkalimetallsilicat in einer wäßrigen Lösung der starken Säure aufgelöst wird, so daß in Schritt (a) ein wäßrige Lösung des Silicats erhalten wird.

12. Verfahren zur Herstellung eines wäßrigen Kieselsäuresols nach Anspruch 8, in dem das Alkalimetallsilicat in Schritt (a) in einer wäßrigen Lösung aufgelöst wird, die eine Konzentration an Schwefelsäure, Salzsäure oder Salpetersäure von 0,015 bis 15 Gew.-% hat.

13. Verfahren zur Herstellung eines wäßrigen Kieselsäuresols nach Anspruch 8, in dem das Alkalimetallsilicat in Schritt (a) in einer wäßrigen Lösung aufgelöst wird, die eine Salpetersäure-Konzentration von 0,015 bis 15 Gew.-% hat.

14. Verfahren zur Herstellung eines wäßrigen Kieselsäuresols nach Anspruch 8, in dem die wäßrige Lösung von Natrium- oder Kaliumhydroxid in Schritt (d) eine Hydroxid-Konzentration zwischen 2 und 20 Gew.-% hat.

15. Verfahren zur Herstellung eines wäßrigen Kieselsäuresols nach Anspruch 8, in dem in Schritt (g) das Ammoniak als wäßrige Ammoniak-Lösung, die eine Ammoniak-Konzentration zwischen 5 und 30 Gew.-% hat, zugesetzt wird.

16. Verfahren zur Herstellung eines stabilen wäßrigen Kieselsäuresols, das eine SiO₂-Konzentration zwischen 30 und 50 Gew.-% hat, das im wesentlichen von irgendwelchen anderen mehrwertigen Metalloxiden als Siliciumdioxid frei ist und in dem die Partikel aus kolloidalem Siliciumdioxid eine durchschnittliche Partikelgröße zwischen 10 und 30 nm haben, umfassend die Schritte (a), (b), (c), (d), (e), (f) und (g):
(a) ein Schritt, in dem eine wäßrige Lösung eines Alkalimetallsilicats, die eine Konzentration an SiO₂ des Silicats von 1 bis 6 Gew.-% hat und die andere mehrwertige Metalloxide als Siliciumdioxid in einer Menge von 300 bis 3000 ppm, bezogen auf das Gewicht des Siliciumdioxids des Silicats, enthält, mit einer Raumgeschwindigkeit von 1 bis 10 pro Stunde durch eine Säule, die mit einer solchen Menge eines Kationen-Austauscherharzes in Wasserstoff-Form gefüllt ist, wie sie zum Ionenaustausch aller Metallionen in der wäßrigen Lösung ausreichend ist, geleitet wird, während die Lösung im Inneren der Säule während des Durchleitens bei einer Temperatur zwischen 0 und 60°C gehalten wird, und dann eine starke Säure in einer Menge von 100 bis 10000 ppm, bezogen auf das Gewicht des Ausflusses aus der Säule, dem Auslauf zugesetzt wird;
(b) ein Schritt, in dem eine wäßrige Lösung, die die starke Säure enthält und die in Schritt (a) erhalten wird, mit einer Raumgeschwindigkeit von 0,1 bis 10 pro Stunde durch eine Säule, die in einer solchen Menge mit einem Kationen-Austauscherharz in der Wasserstoff-Form gefüllt ist, wie sie zum Ionenaustausch aller Metallionen in der wäßrigen Lösung ausreichend ist, geleitet wird, während die Temperatur der Lösung im Inneren der Säule während des Durchleitens bei einer Temperatur zwischen 0 und 60°C gehalten wird;
(c) ein Schritt, in dem die in Schritt (b) erhaltene Lösung mit einer Raumgeschwindigkeit von 1 bis 10 pro Stunde durch eine Säule, die mit einem Anionen-Austauscherharz in der Hydroxyl-Form in einer solchen Menge, wie sie für einen Ionenaustausch aller Anionen in der wäßrigen Lösung ausreichend ist, gefüllt ist, geleitet wird, während die Lösung im Inneren der Säule während des Durchleitens bei einer Temperatur zwischen 0 und 60°C gehalten wird;
(d) ein Schritt, in dem eine wäßrige Lösung von Natrium- oder Kaliumhydroxid der in Schritt (c) erhaltenen wäßrigen Lösung in einem Molverhältnis von 1 mol Na₂O oder K₂O in der wäßrigen Lösung des Hydroxids zu 60 bis 200 mol SiO₂, das in der in Schritt (c) erhaltenen wäßrigen Lösung enthalten ist, zugesetzt wird, wobei die resultierende Lösung während des Zusetzens bei einer Temperatur zwischen 0 und 60°C gehalten wird;
(e) ein Schritt, in dem 5 bis 40 Gew.-Teile der in Schritt (d) erhaltenen Lösung kontinuierlich zu 1 Gew.-Teil der in Schritt (d) erhaltenen Lösung in einem Behälter über einen Zeitraum von 50 bis 200 Stunden geführt werden, während die Temperatur der Flüssigkeit in dem Behälter zwischen 70 und 100°C bei normalem bis reduziertem Druck gehalten wird, um Wasser in der Flüssigkeit zu verdampfen, und das verdampfte Wasser aus dem Behälter so entfernt wird, daß das Volumen der Flüssigkeit in dem Behälter während des ganzen Zuführens konstant sein kann, wodurch ein stabiles wäßriges Sol aus kolloidalem Siliciumdioxid, das eine durchschnittliche Partikelgröße zwischen 10 und 30 nm hat, mit einer SiO₂-Konzentration zwischen 30 und 50 Gew.-% gebildet wird;
(f) ein Schritt, in dem das in Schritt (e) erhaltene Sol mit einer Raumgeschwindigkeit von 2 bis 20 pro Stunde durch eine Säule, die mit einem Kationen-Austauscherharz in der Wasserstoff-Form in einer Menge gefüllt ist, wie sie zum Ionenaustausch aller Metallionen in dem Sol ausreichend ist, geleitet wird, während das Sol im Inneren der Säule während des gesamten Durchleitens bei einer Temperatur zwischen 0 und 60°C gehalten wird;
(g) ein Schritt, in dem dem in Schritt (f) erhaltenen Sol Ammoniak in einer Menge zugesetzt wird, daß bei einer Temperatur des Sols zwischen 0 und 100°C ein pH-Wert des Sols zwischen 8 und 10,5 erreicht wird.

17. Verfahren zur Herstellung eines wäßrigen Kieselsäuresols nach Anspruch 16, in dem das Alkalimetallsilicat in Schritt (a) Natriumwasserglas ist, das ein Molverhältnis SiO₂/Na₂O von 2 bis 4 hat.

18. Verfahren zur Herstellung eines wäßrigen Kieselsäuresols nach Anspruch 16, in dem die starke Säure in Schritt (a) Schwefelsäure, Salpetersäure, Salzsäure, Sulfaminsäure oder Ameisensäure ist.

19. Verfahren zur Herstellung eines wäßrigen Kieselsäuresols nach Anspruch 16, in dem die starke Säure in Schritt (a) eine wäßrige Lösung ist, die eine Schwefelsäure-, Salpetersäure- oder Salzsäure-Konzentration von 10 bis 100 Gew.-% hat.

20. Verfahren zur Herstellung eines wäßrigen Kieselsäuresols nach Anspruch 16, in dem die starke Säure in Schritt (a) eine wäßrige Lösung ist, die eine Salpetersäure-Konzentration von 10 bis 100 Gew.-% hat.

21. Verfahren zur Herstellung eines wäßrigen Kieselsäuresols nach Anspruch 16, in dem die wäßrige Lösung von Natrium- oder Kaliumumhydroxid in Schritt (d) eine Konzentration des Hydroxids zwischen 2 und 20 Gew.-% hat.

22. Verfahren zur Herstellung eine wäßrigen Kieselsäuresols nach Anspruch 16, in dem das Ammoniak in Schritt (g) als wäßrige Ammoniak-Lösung, die eine Ammoniak-Konzentration von 5 bis 30 Gew.-% hat.

23. Verfahren zur Herstellung einer wäßrigen Lösung von aktiver Kieselsäure, die eine SiO₂-Konzentration von 1 bis 6 Gew.-% hat und die im wesentlichen von irgendwelchen anderen mehrwertigen Metalloxiden als Siliciumdioxid frei ist, umfassend die Schritte (a), (b) und (c):
(a) ein Schritt, in dem eine wäßrige Lösung eines Alkalimetallsilicats, die eine Konzentration an SiO₂ des Silicats von 1 bis 6 Gew.-% und eine Konzentration eines Salzes einer starken Säure von 150 bis 15 000 Gewichts-ppm hat, durch Auflösen eines Salzes einer starken Säure und eines Alkalimetallsilicates, das andere mehrwertige Metalloxide als Siliciumdioxid in einer Menge von 300 bis 3000 Gewichts-ppm, bezogen auf das Siliciumdioxid des Silicats, enthält, in Wasser hergestellt wird;
(b) ein Schritt, in dem die in Schritt (a) erhaltene wäßrige Lösung mit einer Raumgeschwindigkeit von 0,1 bis 10 pro Stunde durch eine Säule, die in einer solchen Menge mit einem Kationen-Austauscherharz in der Wasserstoff-Form gefüllt ist, wie sie zum Ionenaustausch aller Metallionen in der wäßrigen Lösung ausreichend ist, geleitet wird, während die Lösung im Inneren der Säule während des Durchleitens bei einer Temperatur zwischen 0 und 60°C gehalten wird;
(c) ein Schritt, in dem die in Schritt (b) erhaltene Lösung mit einer Raumgeschwindigkeit von 1 bis 10 pro Stunde durch eine Säule, die mit einem Anionen-Austauscherharz in der Hydroxyl-Form in einer solchen Menge, wie sie für einen Ionenaustausch aller Anionen in der wäßrigen Lösung ausreichend ist, gefüllt ist, geleitet wird, während die Lösung im Inneren der Säule während des Durchleitens bei einer Temperatur zwischen 0 und 60°C gehalten wird.

24. Verfahren zur Herstellung einer wäßrigen Lösung von aktiver Kieselsäure nach Anspruch 23, in dem das Alkalimetallsilicat in Schritt (a) Natriumwasserglas ist, das ein Molverhältnis SiO₂/Na₂O von 2 bis 4 hat.

25. Verfahren zur Herstellung einer wäßrigen Lösung von aktiver Kieselsäure nach Anspruch 23, in dem das Salz einer starken Säure in Schritt (a) Sulfat, Nitrat, Hydrochlorid, Sulfamat oder Formiat von Na, K, Li, Cs, NH₄, einem quaternärem Ammonium oder einem Amin ist.

26. Verfahren zur Herstellung einer wäßrigen Lösung von aktiver Kieselsäure nach Anspruch 23, in dem das Alkalimetallsilicat in einer wäßrigen Lösung eines Salzes einer starken Säure aufgelöst wird, so daß die wäßrige Lösung des Alkalimetallsilicats in Schritt (a) erhalten wird.

27. Verfahren zur Herstellung einer wäßrigen Lösung von aktiver Kieselsäure nach Anspruch 23, in dem das Alkalimetallsilicat in Schritt (a) in einer wäßrigen Lösung aufgelöst wird, die eine Konzentration von 0,02 bis 20 Gew.-% Nitrat von Na, K, Li oder NH₄ hat.

28. Verfahren zur Herstellung einer wäßrigen Lösung von aktiver Kieselsäure, die eine SiO₂-Konzentration von 1 bis 6 Gew.-% hat und die im wesentlichen von anderen mehrwertigen Metalloxiden als Siliciumdioxid frei ist, umfassend die Schritt (a), (b) und (c):
(a) ein Schritt, in dem eine wäßrige Lösung eines Alkalimetallsilicats, die eine Konzentration an SiO₂ des Silicats von 1 bis 6 Gew.-% und eine Konzentration eines Salzes einer starken Säure von 150 bis 15000 Gewichts-ppm hat, durch Auflösen einer starken Säure und eines Alkalimetallsilicats, das andere mehrwertige Metalloxide als Siliciumdioxid in einer Menge von 300 bis 3000 Gewichts-ppm, bezogen auf das Siliciumdioxid des Silicats, enthält, in Wasser hergestellt wird;
(b) ein Schritt, in dem die in Schritt (a) erhaltene wäßrige Lösung mit einer Raumgeschwindigkeit von 0,1 bis 10 pro Stunde durch eine Säule, die in einer solchen Menge mit einem Kationen-Austauscherharz in der Wasserstoff-Form gefüllt ist, wie sie zum Ionenaustausch aller Metallionen in der wäßrigen Lösung ausreichend ist, geleitet wird, während die Lösung im Inneren der Säule während des Durchleitens bei einer Temperatur zwischen 0 und 60°C gehalten wird;
(c) ein Schritt, in dem die in Schritt (b) erhaltene Lösung mit einer Raumgeschwindigkeit von 1 bis 10 pro Stunde durch eine Säule, die mit einem Anionen-Austauscherharz in der Hydroxyl-Form in einer solchen Menge, wie sie für einen Ionenaustausch aller Anionen in der wäßrigen Lösung ausreichend ist, gefüllt ist, geleitet wird, während die Lösung im Inneren der Säule während des Durchleitens bei einer Temperatur zwischen 0 und 60°C gehalten wird.

29. Verfahren zur Herstellung einer wäßrigen Lösung von aktiver Kieselsäure nach Anspruch 28, in dem das Alkalimetallsilicat in Schritt (a) Natriumwasserglas ist, das ein Molverhältnis SiO₂/Na₂O von 2 bis 4 hat.

30. Verfahren zur Herstellung einer wäßrigen Lösung von aktiver Kieselsäure nach Anspruch 28, in dem die starke Säure in Schritt (a) Schwefelsäure, Salpetersäure, Salzsäure, Sulfaminsäure oder Ameisensäure ist.

31. Verfahren zur Herstellung einer wäßrigen Lösung von aktiver Kieselsäure nach Anspruch 28, in dem das Alkalimetallsilicat in einer wäßrigen Lösung einer starken Säure aufgelöst wird, wobei die wäßrige Lösung von Alkalimetallsilicat in Schritt (a) erhalten wird.

32. Verfahren zur Herstellung einer wäßrigen Lösung von aktiver Kieselsäure nach Anspruch 28, in dem die starke Säure in Schritt (a) eine wäßrige Lösung ist, die eine Schwefelsäure-, Salpetersäure- oder Salzsäure-Konzentration von 0,015 bis 15 Gew.-% hat.

33. Verfahren zur Herstellung einer wäßrigen Lösung von aktiver Kieselsäure nach Anspruch 28, in dem die starke Säure in Schritt (a) eine wäßrige Lösung ist, die eine Salpetersäure-Konzentration von 0,015 bis 15 Gew.-% hat.

34. Verfahren zur Herstellung einer wäßrigen Lösung von aktiver Kieselsäure, die eine SiO₂-Konzentration von 1 bis 6 Gew.-% hat und die im wesentlichen von irgendwelchen anderen mehrwertigen Metalloxiden als Siliciumdioxid frei ist, umfassend die Schritte (a), (b) und (c):
(a) ein Schritt, in dem eine wäßrige Lösung eines Alkalimetallsilicats, die eine Konzentration an SiO₂ des Silicats von 1 bis 6 Gew.-% hat, und die andere mehrwertige Metalloxide als Siliciumdioxid in einer menge von 300 bis 3000 Gewichts-ppm, bezogen auf das Siliciumdioxid des Silicats, enthält, mit einer Raumgeschwindigkeit von 0,1 bis 10 pro Stunde durch eine Säule, die in einer solchen Menge mit einem Kationen-Austauscherharz in der Wasserstoff-Form gefüllt ist, wie sie zum Ionenaustausch aller Metallionen in der wäßrigen Lösung ausreichend ist, geleitet wird, während die Lösung im Inneren der Säule während der Durchleitens bei einer Temperatur zwischen 0 und 60°C gehalten wird, und dann eine starke Säure in einer Menge von 100 bis 10000 Gewichts-ppm, bezogen auf den Auslauf aus der Säule, diesem Auslauf zugesetzt wird;
(b) ein Schritt, in dem eine wäßrige Lösung, die die starke Säure enthält, und die in Schritt (a) erhalten wird, mit einer Raumgeschwindigkeit von 0,1 bis 10 pro Stunde durch eine Säule, die in einer solchen Menge mit einem Kationen-Austauscherharz in der Wasserstoff-Form gefüllt ist, wie sie zum Ionenaustausch aller Metallionen in der wäßrigen Lösung ausreichend ist, geleitet wird, während die Lösung im Inneren der Säule während des Durchleitens bei einer Temperatur zwischen 0 und 60°C gehalten wird; und
(c) ein Schritt, in dem die in Schritt (b) erhaltene Lösung mit einer Raumgeschwindigkeit von 1 bis 10 pro Stunde durch eine Säule, die mit einem Anionen-Austauscherharz in der Hydroxyl-Form in einer solchen Menge, wie sie für einen Ionenaustausch aller Anionen in der wäßrigen Lösung ausreichend ist, gefüllt ist, geleitet wird, während die Lösung im Inneren der Säule während des Durchleitens bei einer Temperatur zwischen 0 und 60°C gehalten wird.

35. Verfahren zur Herstellung einer wäßrigen Lösung von aktiver Kieselsäure nach Anspruch 34, in dem das Alkalimetallsilicat in Schritt (a) Natriumwasserglas ist, das ein Molverhältnis SiO₂/Na₂O von 2 bis 4 hat.

36. Verfahren zur Herstellung einer wäßrigen Lösung von aktiver Kieselsäure nach Anspruch 34, in dem die starke Säure in Schritt (a) Schwefelsäure, Salpetersäure, Salzsäure, Sulfaminsäure oder Ameisensäure ist.

37. Verfahren zur Herstellung einer wäßrigen Lösung von aktiver Kieselsäure nach Anspruch 34, in dem die starke Säure in Schritt (a) eine wäßrige Lösung ist, die eine Schwefelsäure-, Salpetersäure- oder Salzsäure-Konzentration von 10 bis 100 Gew.-% hat.

38. Verfahren zur Herstellung einer wäßrigen Lösung von aktiver Kieselsäure nach Anspruch 34, in dem die starke Säure in Schritt (a) eine wäßrige Lösung ist, die eine Salpetersäure-Konzentration von 10 bis 100 Gew.-% hat.

39. Verfahren zur Herstellung eines stabilen wäßrigen Kieselsäuresols, das eine SiO₂-Konzentration zwischen 30 und 50 Gew.-% hat, das im wesentlichen von irgendwelchen anderen mehrwertigen Metalloxiden als Siliciumdioxid frei ist, und in dem die Partikel aus kolloidalem Siliciumdioxid eine durchschnittliche Partikelgröße zwischen 10 und 30 nm haben, umfassend die Schritte (1), (2), (3), (4), (5), (6) und (7):
(1) ein Schritt, in dem eine wäßrige Lösung eines Alkalimetallsilicates, die eine Konzentration an SiO₂ des Silicats von 1 bis 6 Gew.-% und eine Konzentration eines Salzes einer starken Säure von 150 bis 750 Gewichts-ppm hat, durch Auflösen eines Salzes einer starken Säure und eines Alkalimetallsilicates, das andere mehrwertige Metalloxide als Siliciumdioxid in einer Menge von 300 bis 1500 Gewicht-ppm, bezogen auf das Siliciumdioxids des Silicats enthält, in Wasser hergestellt wird;
(2) ein Schritt, in dem die in Schritt (1) erhaltene wäßrige Lösung mit einer Raumgeschwindigkeit von 0,1 bis 10 pro Stunde durch eine Säule, die in einer solchen Menge mit einem Kationen-Austauscherharz in der Wasserstoff-Form gefüllt ist, wie sie zum Ionenaustausch aller Metallionen in der wäßrigen Lösung ausreichend ist, geleitet wird, während die Temperatur der Lösung im Inneren der Säule während des Durchleitens bei einer Temperatur zwischen 0 und 60°C gehalten wird;
(3) ein Schritt, in dem eine wäßrige Lösung von Natrium- oder Kaliumhydroxid der in Schritt (2) erhaltenen wäßrigen Lösung in einem Molverhältnis von 1 mol Na₂O oder K₂O in der wäßrigen Lösung des Hydroxids zu 60 bis 200 mol SiO₂, das in der in Schritt (2) erhaltenen wäßrigen Lösung enthalten ist, zugesetzt wird, wobei die Temperatur der resultierenden Lösung während des Zusetzens bei einer Temperatur zwischen 0 und 60°C gehalten wird;
(4) ein Schritt, in dem 5 bis 20 Gew.-Teile der in Schritt (3) erhaltenen Lösung kontinuierlich zu einem Gew.-Teil der in Schritt (3) erhaltenen Lösung in einem Behälter über einen Zeitraum von 50 bis 200 h geführt werden, während die Flüssigkeit in dem Behälter bei einer Temperatur zwischen 70 und 100°C unter normalem oder reduziertem Druck gehalten wird, um Wasser in der Flüssigkeit zu verdampfen, und das verdampfte Wasser aus dem Behälter so entfernt wird, daß das Volumen der Flüssigkeit in dem Behälter während des ganzen Zuführens konstant sein kann, wodurch ein stabiles wäßriges Sol aus kolloidalem Siliciumdioxid, das eine durchschnittliche Partikelgröße zwischen 10 und 30 nm hat, mit einer SiO₂-Konzentration von 30 bis 50 Gew.-% gebildet wird;
(5) ein Schritt, in dem das in Schritt (4) erhaltene Sol mit einer Raumgeschwindigkeit von 2 bis 20 pro Stunde durch eine Säule, die mit einem Kationen-Ionenaustauscherharz in der Wasserstoff-Form in einer Menge gefüllt ist, wie sie zum Ionenaustausch aller Metallionen in dem Sol ausreichend ist, geleitet wird, während das Sol im Inneren der Säule während des gesamten Durchleitens bei einer Temperatur zwischen 0 und 60°C gehalten wird;
(6) ein Schritt, in dem das in Schritt (5) erhaltene Sol mit einer Raumgeschwindigkeit von 1 bis 10 pro Stunde durch eine Säule, die in einer Menge, wie sie zum Ionenaustausch aller Anionen in dem Sol ausreichend ist, mit einem Anionenaustauscherharz gefüllt ist, geleitet wird, während die Temperatur des Sols im Inneren der Säule während des Durchleitens bei einer Temperatur zwischen 0 und 60°C gehalten wird;
(7) ein Schritt, in dem dem in Schritt (6) erhaltenen Sol Ammoniak in einer Menge zugesetzt wird, daß bei einer Temperatur des Sols zwischen 0 und 100°C ein pH-Wert des Sols zwischen 8 und 10,5 erreicht wird.

40. Verfahren zur Herstellung eines wäßrigen Kieselsäuresols nach Anspruch 39, in dem das Alkalimetallsilicat in Schritt (1) ein Natriumwasserglas ist, das ein Molverhältnis SiO₂/Na₂O von 2 bis 4 hat.

41. Verfahren zur Herstellung eines wäßrigen Kieselsäuresols nach Anspruch 39, in dem das Salz einer starken Säure in Schritt (1) Sulfat, Nitrat, Hydrochlorid, Sulfmat oder Formiat von Na, K, Li, Cs, NH₄, einem quaternärem Ammonium oder einem Amin ist.

42. Verfahren zur Herstellung eines wäßrigen Kieselsäuresols nach Anspruch 39, in dem das Alkalimetallsilicat in einer wäßrigen Lösung eines Salzes einer starken Säure aufgelöst wird, so daß die wäßrige Lösung des Alkalimetallsilicats in Schritt (1) erhalten wird.

43. Verfahren zur Herstellung eines wäßrigen Kieselsäuresols nach Anspruch 39, in dem das Alkalimetallsilicat in Schritt (1) in einer wäßrigen Lösung aufgelöst wird, die eine Konzentration von 0,02 bis 20 Gew.-% Nitrat von Na, K, Li oder NH₄ hat.

44. Verfahren zur Herstellung eines wäßrigen Kieselsäuresols nach Anspruch 39, in dem die wäßrige Lösung von Natrium- oder Kaliumhydroxid in Schritt (3) eine Konzentration des Hydroxids zwischen 2 und 20 Gew.-% hat.

45. Verfahren zur Herstellung eines wäßrigen Kieselsäuresols nach Anspruch 39, in dem das Ammoniak in Schritt (7) als wäßrige Ammoniak-Lösung, die eine Ammoniak-Konzentration zwischen 5 und 30 Gew.-% hat, zugesetzt wird.

46. Verfahren zur Herstellung eines stabilen wäßrigen Kieselsäuresols, das eine SiO₂-Konzentration zwischen 30 und 50 Gew.-% hat, das im wesentlichen von irgendwelchen anderen mehrwertigen Metalloxiden als Siliciumdioxid frei ist und in dem die Partikel aus kolloidalem Siliciumdioxid eine durchschnittliche Partikelgröße zwischen 10 und 30 nm haben, umfassend die Schritt (1), (2), (3), (4), (5), (6) und (7):
(1) ein Schritt, in dem eine wäßrige Lösung eines Alkalimetallsilicats, die eine Konzentration an SiO₂ des Silicats von 1 bis 6 Gew.-% und eine Konzentration einer starken Säure von 100 bis 500 Gewichts-ppm hat, durch Auflösen einer starken Säure und eines Alkalimetallsilicats, das andere mehrwertige Metalloxide als Siliciumdioxid in einer Menge von 300 bis 1500 Gewichts-ppm, bezogen auf das Siliciumdioxid des Silicats, enthält, in Wasser hergestellt wird;
(2) ein Schritt, in dem die in Schritt (1) erhaltene wäßrige Lösung mit einer Raumgeschwindigkeit von 0,1 bis 10 pro Stunde durch eine Säule, die in einer solchen Menge mit einem Kationen-Austauscherharz in der Wasserstoff-Form gefüllt ist, wie sie zum Ionenaustausch aller Metallionen in der wäßrigen Lösung ausreichend ist, geleitet wird, während die Lösung im Inneren der Säule bei einer Temperatur zwischen 0 und 60°C gehalten wird;
(3) ein Schritt, in dem eine wäßrige Lösung von Natrium- oder Kaliumhydroxid der in Schritt (2) erhaltenen wäßrigen Lösung in einem Molverhältnis von 1 mol Na₂O oder K₂O in der wäßrigen Lösung des Hydroxids zu 60 bis 200 mol SiO₂, das in der in Schritt (2) erhaltenen wäßrigen Lösung enthalten ist, zugesetzt wird, wobei während des Zusetzens die Temperatur der resultierenden Lösung zwischen 0 und 60°C gehalten wird;
(4) ein Schritt, in dem 5 bis 20 Gew.-Teile der in Schritt (3) erhaltenen Lösung kontinuierlich zu einem Gew.-Teil der in Schritt (3) erhaltenen Lösung in einem Behälter über einen Zeitraum von 50 bis 200 h geführt werden, während die Temperatur der Flüssigkeit in dem Behälter zwischen 70 und 100°C bei normalem bis reduziertem Druck gehalten wird, um Wasser in der Flüssigkeit zu verdampfen, und das verdampfte Wasser aus dem Behälter so entfernt wird, daß das Volumen der Flüssigkeit in dem Behälter während des gesamten Zuführens konstant sein kann, wodurch ein stabiles wäßriges Sol aus kolloidalem Siliciumdioxid, das eine durchschnittliche Partikelgröße zwischen 10 und 30 nm hat, mit einer SiO₂-Konzentration von 30 bis 50 Gew.-% gebildet wird;
(5) ein Schritt, in dem das in Schritt (4) erhaltene Sol mit einer Raumgeschwindigkeit von 2 bis 20 pro Stunde durch eine Säule, die mit einem Kationen-Austauscherharz in der Wasserstoff-Form in einer Menge gefüllt ist, wie sie zum Ionenaustausch aller Metallionen in dem Sol ausreichend ist, geleitet wird, während das Sol im Inneren der Säule während des gesamten Durchleitens bei einer Temperatur zwischen 0 und 60°C gehalten wird;
(6) ein Schritt, in dem das in Schritt (5) erhaltene Sol mit einer Raumgeschwindigkeit von 1 bis 10 pro Stunde durch eine Säule, die mit einem Anionen-Austauscherharz in der Hydroxyl-Form in einer Menge gefüllt ist, wie sie zum Ionenaustausch aller Anionen in dem Sol ausreichend ist, gefüllt ist, geleitet wird, während die Temperatur des Sols im Inneren der Säule während des gesamten Durchleitens zwischen 0 und 60°C gehalten wird;
(7) ein Schritt, in dem dem in Schritt (6) erhaltenen Sol Ammoniak in einer Menge zugesetzt wird, daß bei einer Temperatur des Sols zwischen 0 und 100°C ein pH-Wert des Sols zwischen 8 und 10,5 erreicht wird.

47. Verfahren zur Herstellung eines wäßrigen Kieselsäuresols nach Anspruch 46, in dem das Alkalimetallsilicat in Schritt (1) ein Natriumwasserglas ist, das ein Molverhältnis SiO₂/Na₂O von 2 bis 4 hat.

48. Verfahren zur Herstellung eines wäßrigen Kieselsäuresols nach Anspruch 46, in dem die starke Säure in Schritt (1) Schwefelsäure, Salpetersäure, Salzsäure, Sulfaminsäure oder Ameisensäure ist.

49. Verfahren zur Herstellung eines wäßrigen Kieselsäuresols nach Anspruch 46, in dem das Alkalimetallsilicat in eienr wäßrigen Lösung der starken Säure aufgelöst wird, so daß in Schritt (1) eine wäßrige Lösung des Silicats erhalten wird.

50. Verfahren zur Herstellung eines wäßrigen Kieselsäuresols nach Anspruch 46, in dem das Alkalimetallsilicat in Schritt (1) in einer wäßrigen Lösung aufgelöst wird, die eine Schwefelsäure-, Salzsäure- oder Salptersäure-Konzentration von 0,015 bis 15 Gew.-% hat.

51. Verfahren eines wäßrigen Kieselsäuresols nach Anspruch 46, in dem das Alkalimetallsilicat in Schritt (1) in einer wäßrigen Lösung aufgelöst wird, die eine Salpetersäure-Konzentration von 0,015 bis 15 Gew.-% hat.

52. Verfahren zur Herstellung eines wäßrigen Kieselsäuresols nach Anspruch 46, in dem die wäßrige Lösung von Natrium- oder Kaliumhydroxid in Schritt (3) eine Konzentration des Hydroxids zwischen 2 und 20 Gew.-% hat.

53. Verfahren zur Herstellung eines wäßrigen Kieselsäuresols nach Anspruch 46, in dem das Ammonium in Schritt (7) als wäßrige Ammoniak-Lösung, die eine Ammoniak-Konzentration von 5 bis 30 Gew.-% hat, zugesetzt wird.

54. Verfahren zur Herstellung eines stabilen wäßrigen Kieselsäuresols, das eine SiO₂-Konzentration zwischen 30 und 50 Gew.-% hat, das im wesentlichen von irgendwelchen anderen mehrwertigen Metalloxiden als Siliciumdioxid frei ist und in dem die Partikel aus kolloidalem Siliciumdioxid eine durchschnittliche Partikelgröße zwischen 10 und 30 nm haben, umfassend die Schritte (1), (2), (3), (4), (5), (6) und (7):
(1) ein Schritt, in dem eine wäßrige Lösung eines Alkalimetallsilicats, die eine Konzentration an SiO₂ des Silicats von 1 bis 6 Gew.-% hat und die andere mehrwertige Metalloxide als Siliciumdioxid in einer Menge von 300 bis 1500 Gewichts-ppm, bezogen auf das Siliciumdioxid des Silicats enthält, mit einer Raumgeschwindigkeit von 1 bis 10 pro Stunde durch eine Säule, die in einer solchen Menge mit einem Kationen-Austauscherharz in der Wasserstoff-Form gefüllt ist, wie sie zum Ionenaustausch aller Metallionen in der wäßrigen Lösung ausreichend ist, geleitet wird, während die Lösung im Inneren der Säule des während des Durchleitens bei einer Temperatur zwischen 0 und 60°C gehalten wird, und dann eine starke Säure in einer Menge zwischen 100 und 500 Gewichts-ppm, bezogen auf den Auslauf aus der Säule, diesem Auslauf zugesetzt wird;
(2) ein Schritt, in dem eine wäßrige Lösung, die die starke Säure enthält und die Schritt (1) erhalten wird, mit einer Raumgeschwindigkeit von 0,1 bis 10 pro Stunde durch eine Säule, die in solcher Menge mit einem Kationen-Austauscherharz in der Wasserstoff-Form gefüllt ist, wie sie zum Ionenaustausch aller Metallionen in der wäßrigen Lösung ausreichend ist, geleitet wird, während die Lösung im Inneren der Säule während des Durchleitens bei einer Temperatur zwischen 0 und 60°C gehalten wird;
(3) ein Schritt, in dem eine wäßrige Lösung von Natrium- oder Kaliumhydroxid der in Schritt (2) erhaltenen wäßrigen Lösung in einem Molverhältnis von 1 mol Na₂O oder K₂O in der wäßrigen Lösung des Hydroxids zu 60 bis 200 mol SiO₂, das in der in Schritt (2) erhaltenen wäßrigen Lösung enthalten ist, zugesetzt wird, wobei während des Zusetzens die Temperatur der resultierenden Lösung zwischen 0 und 60°C gehalten wird;
(4) ein Schritt, in dem 5 bis 20 Gew.-Teile der in Schritt (3) erhaltenen Lösung kontinuierlich zu einem Gew.-Teil der in Schritt (3) erhaltenen Lösung in einem Behälter über einen Zeitraum von 50 bis 200 h geführt werden, während die Temperatur der Flüssigkeit in dem Behälter zwischen 70 und 100°C bei normalem bis reduziertem Druck gehalten wird, um Wasser in der Flüssigkeit zu verdampfen, und das verdampfte Wasser aus dem Behälter so entfernt wird, daß das Volumen der Flüssigkeit in dem Behälter während des ganzen Zuführens konstant sein kann, wodurch ein stabiles wäßriges Sol aus kolloidalem Siliciumdioxid, das eine durchschnittliche Partikelgröße zwischen 10 und 30 nm hat, mit einer SiO₂-Konzentration von 30 bis 50 Gew.-% gebildet wird;
(5) ein Schritt, in dem das in Schritt (4) erhaltene Sol mit einer Raumgeschwindigkeit von 2 bis 20 pro Stunde durch eine Säule, die mit einem Kationen-Austauscherharz in der Wasserstoff-Form in einer Menge gefüllt ist, wie sie zum Ionenaustausch aller Metallionen in dem Sol ausreichend ist, geleitet wird, wobei das Sols im Inneren der Säule während des gesamten Durchleitens bei einer Temperatur zwischen 0 und 60°C gehalten wird;
(6) der Schritt, in dem das in Schritt (5) erhaltene Sol mit einer Raumgeschwindigkeit von 1 bis 10 pro Stunde durch eine Säule, die in einer solchen Menge mit einem Anionen-Austauscherharz in der Hydroxyl-Form gefüllt ist, wie sie zum Ionenaustausch aller Anionen in dem Sol ausreichend ist, geleitet wird, während das Sol im Inneren der Säule während des Durchleitens bei einer Temperatur zwischen 0 und 60°C gehalten wird;
(7) ein Schritt, in dem dem in Schritt (6) erhaltenen Sol Ammoniak in einer Menge zugesetzt wird, daß bei einer Temperatur des Sols zwischen 0 und 100°C ein pH-Wert des Sols zwischen 8 und 10,5 erreicht wird.

55. Verfahren zur Herstellung eines wäßrigen Kieselsäuresols nach Anspruch 54, in dem das Alkalimetallsilicat in Schritt (1) ein Natriumwasserglas ist, das ein Molverhältnis SiO₂/Na₂O von 2 bis 4 hat.

56. Verfahren zur Herstellung eines wäßrigen Kieselsäuresols nach Anspruch 54, in dem die starke Säure in Schritt (1) Schwefelsäure, Salpetersäure, Salzsäure, Sulfaminsäure oder Ameisensäure ist.

57. Verfahren zur Herstellung eines wäßrigen Kieselsäuresols nach Anspruch 54, in dem die starke Säure in Schritt (1) eine wäßrige Lösung ist, die eine Schwefelsäure-, Salpetersäure- oder Salzsäure-Konzentration von 10 bis 100 Gew.-% hat.

58. Verfahren zur Herstellung eines wäßrigen Kieselsäuresols nach Anspruch 54, in dem die starke Säure in Schritt (1) eine wäßrige Lösung ist, die eine Salpetersäure-Konzentration von 10 bis 100 Gew.-% hat.

59. Verfahren zur Herstellung eines wäßrigen Kieselsäuresols nach Anspruch 54, in dem die wäßrige Lösung von Natrium- oder Kaliumhydroxid in Schritt (3) eine Konzentration des Hydroxids zwischen 2 und 20 Gew.-% hat.

60. Verfahren zur Herstellung eines wäßrigen Kieselsäuresols nach Anspruch 54, in dem das Ammoniak in Schritt (7) als wäßrige Ammoniak-Lösung, die eine Ammoniak-Konzentration zwischen 5 und 30 Gew.-% hat, zugesetzt wird.

## Revendications

1. Procédé de préparation d'un sol aqueux stable de silice ayant une concentration en SiO₂ de 30 à 50 % en poids, sol qui est essentiellement dépourvu de tous autres oxydes de métaux polyvalents que la silice et dans lequel les particules de silice colloïdale ont une taille particulaire moyenne de 10 à 30 mµm, le procédé comprenant les étapes (a), (b), (c), (d), (e), (f) et (g) :
(a) une étape dans laquelle on prépare une solution aqueuse d'un silicate de métal alcalin, ayant une concentration de 1 à 6 % en poids de SiO₂ du silicate et une concentration de 150 à 15 000 ppm en poids d'un sel d'un acide fort, en dissolvant un sel d'un acide fort et un silicate de métal alcalin contenant d'autres oxydes de métaux polyvalents que la silice, en une quantité de 300 à 3 000 ppm en poids de la silice du silicate, dans de l'eau,
(b) une étape dans laquelle on fait passer la solution aqueuse obtenue dans l'étape (a) dans une colonne garnie d'une résine échangeuse de cations sous forme hydrogène, en une quantité suffisante pour réaliser l'échange d'ions de tous les ions de métaux présents dans la solution aqueuse, à une vitesse spatiale de 0,1 à 10 par heure tout en maintenant une température de 0 à 60°C de la solution à l'intérieur de la colonne pendant tout le passage,
(c) une étape dans laquelle on fait passer la solution aqueuse obtenue dans l'étape (b) à travers une colonne garnie d'une résine échangeuse d'anions, sous forme hydroxylée, en une quantité suffisante pour réaliser l'échange d'ions de tous les anions présents dans la solution aqueuse, à une vitesse spatiale de 1 à 10 par heure tout en maintenant une température de 0 à 60°C de la solution présente à l'intérieur de la colonne pendant tout le passage,
(d) une étape dans laquelle on ajoute une solution aqueuse d'hydroxyde de sodium ou de potassium à la solution aqueuse obtenue à l'étape (c), selon un rapport molaire de 1 mol de Na₂O ou de K₂O présent dans la solution aqueuse de l'hydroxyde pour 60 à 200 mol de SiO₂ contenu dans la solution aqueuse obtenue à l'étape (c), cependant que l'on maintient pendant toute l'addition une température de 0 à 60°C de la solution résultante,
(e) une étape dans laquelle on introduit continuellement de 5 à 40 parties en poids de la solution obtenue à l'étape (d) dans 1 partie en poids de la solution obtenue à l'étape (d), présente dans un récipient, pendant une période de 50 à 200 h, cependant que l'on maintient dans le récipient une température de 70 à 100°C du liquide sous pression normale ou réduite, pour évaporer l'eau présente dans le liquide et que l'on enlève du récipient l'eau évaporée, de sorte que le volume du liquide présent dans le récipient peut être constant pendant toute l'alimentation, afin de former un sol aqueux stable de silice colloïdale ayant une taille particulaire moyenne de 10 à 30 mµm, la silice étant présente en une concentration de SiO₂ de 30 à 50 % en poids,
(f) une étape dans laquelle on fait passer le sol obtenu à l'étape (e) dans une colonne garnie d'une résine échangeuse de cations, sous forme hydrogène, en une quantité suffisante pour réaliser l'échange d'ions de tous les ions métalliques présents dans le sol, à une vitesse spatiale de 2 à 20 par heure tout en maintenant pendant tout le passage une température de 0 à 60°C du sol à l'intérieur de la colonne,
(g) une étape dans laquelle on ajoute au sol obtenu à l'étape (f), de l'ammoniaque en une quantité permettant d'obtenir une valeur de pH de 8 à 10,5 du sol à une température de 0 à 100°C du sol.

2. Procédé de préparation d'un sol aqueux de silice, tel que revendiqué à la revendication 1, dans lequel le silicate de métal alcalin utilisé à l'étape (a) est du "verre sodique à l'eau" (silicate de sodium) ayant un rapport molaire SiO₂/Na₂O de 2 à 4.

3. Procédé de préparation d'un sol aqueux de silice, tel que revendiqué à la revendication 1, dans lequel le sel d'acide fort utilisé dans l'étape (a) est du sulfate, du nitrate, du chlorure ou du chlorhydrate, du sulfamate ou du formiate de Na, de K, de Li, de Cs, de NH₄, d'un ammonium quaternaire ou d'une amine.

4. Procédé de préparation d'un sol aqueux de silice, tel que revendiqué à la revendication 1, dans lequel le silicate de métal alcalin est dissous dans une solution aqueuse d'un sel d'un acide fort de manière à obtenir la solution aqueuse du silicate de métal alcalin utilisée à l'étape (a).

5. Procédé de préparation d'un sol aqueux de silice, tel que revendiqué à la revendication 1, dans lequel on dissout le silicate de métal alcalin dans une solution aqueuse ayant une concentration de 0,02 à 20 % en poids de nitrate de Na, de K, de Li ou de NH₄ dans l'étape (a).

6. Procédé de préparation d'un sol aqueux de silice, tel que revendiqué à la revendication 1, dans lequel la solution aqueuse d'hydroxyde de sodium ou de potassium que l'on utilise dans l'étape (d) a une concentration de 2 à 20 % en poids de l'hydroxyde.

7. Procédé de préparation d'un sol aqueux de silice, tel que revendiqué à la revendication 1, dans lequel l'ammoniac utilisé dans l'étape (g) est ajouté sous forme d'une solution aqueuse d'ammoniaque ayant une concentration de 5 à 30 % en poids d'ammoniaque.

8. Procédé de préparation d'un sol aqueux stable ayant une concentration en SiO₂ de 30 à 50 % en poids, qui est essentiellement dépourvu de tous autres oxydes de métaux polyvalents que la silice et dans lequel les particules de silice colloïdale ont une taille particulaire moyenne de 10 à 30 mµm, le procédé comprenant les étapes (a), (b), (c), (d), (e), (f) et (g) :
(a) une étape dans laquelle on prépare une solution aqueuse d'un silicate de métal alcalin, ayant une concentration de 1 à 6 % en poids de SiO₂ du silicate et ayant une concentration de 100 à 10 000 ppm en poids d'un acide fort, en dissolvant un acide fort et un silicate de métal alcalin contenant d'autres oxydes de métaux polyvalents de la silice, en une quantité de 300 à 3 000 ppm en poids de la silice du silicate, dans de l'eau,
(b) une étape dans laquelle on fait passer, dans une colonne garnie une résine échangeuse de cations sous forme hydrogène, la solution aqueuse obtenue dans l'étape (a) en une quantité suffisante pour réaliser l'échange d'ions de tous les ions de métaux dans la solution aqueuse, à une vitesse spatiale de 0,1 à 10 par heure tout en maintenant pendant tout le passage une température de 0 à 60°C de la solution présente dans la colonne,
(c) une étape dans laquelle on fait passer, dans une colonne garnie d'une résine échangeuse d'anions sous forme hydroxylée, la solution aqueuse obtenue à l'étape (b), en une quantité suffisante pour réaliser l'échange d'ions de tous les anions présents dans la solution aqueuse, à une vitesse spatiale de 1 à 10 par heure tout en maintenant pendant tout le passage une température de 0 à 60°C de la solution présente dans la colonne,
(d) une étape dans laquelle on ajoute une solution aqueuse d'hydroxyde de sodium ou de potassium à la solution aqueuse obtenue à l'étape (c), selon un rapport molaire de 1 mol de Na₂O ou de K₂O présent dans la solution aqueuse de l'hydroxyde pour 60 à 200 mol de SiO₂ contenu dans la solution aqueuse obtenue à l'étape (c), tout en maintenant pendant toute l'addition une température de 0 à 60°C de la solution résultante,
(e) une étape dans laquelle on introduit continuellement de 5 à 40 parties en poids de la solution obtenue à l'étape (d) dans 1 partie en poids de la solution obtenue à l'étape (d), dans un récipient, pendant une période de 50 à 200 h tout en maintenant une température de 70 à 100°C du liquide sous pression normale ou réduite dans le récipient, pour évaporer l'eau présente dans le liquide et l'on enlève du récipient l'eau évaporée, de façon que le volume du liquide présent dans le récipient puisse être constant pendant toute l'alimentation, de façon à former un sol aqueux stable de silice colloïdale ayant une taille particulaire moyenne de 10 à 30 mµm et présentant une concentration de SiO₂ de 30 à 50 % en poids,
(f) une étape dans laquelle on fait passer le sol, obtenu à l'étape (e), dans une colonne garnie d'une résine échangeuse de cations, sous forme hydrogène, en une quantité suffisante pour réaliser l'échange d'ions de tous les ions de métaux présents dans le sol, à une vitesse spatiale de 2 à 20 par heure, tout en maintenant pendant tout le passage une température de 0 à 60°C du sol présent à l'intérieur de la colonne,
(g) une étape dans laquelle on ajoute de l'ammoniaque au sol obtenu à l'étape (f), en une quantité permettant de conférer au sol une valeur de pH de 8 à 10,5 à une température de 0 à 100°C du sol.

9. Procédé de préparation d'un sol aqueux de silice, tel que revendiqué à la revendication 8, dans lequel le silicate de métal alcalin utilisé dans l'étape (a) est un "verre sodique à l'eau" (silicate de sodium) ayant un rapport molaire SiO₂/Na₂O de 2 à 4.

10. Procédé de préparation d'un sol aqueux de silice, tel que revendiqué à la revendication 8, dans lequel l'acide fort utilisé à l'étape (a) est de l'acide sulfurique, nitrique, chlorhydrique, sulfamique ou formique.

11. Procédé de préparation d'un sol aqueux de silice, tel que revendiqué à la revendication 8, dans lequel le silicate de métal alcalin est dissous dans une solution aqueuse de l'acide fort de manière à obtenir une solution aqueuse du silicate utilisée à l'étape (a).

12. Procédé de préparation d'un sol aqueux de silice, tel que revendiqué à la revendication 8, dans lequel le silicate de métal alcalin est dissous dans une solution aqueuse ayant une concentration de 0,015 à 15 % en poids de l'acide sulfurique, de l'acide chlorhydrique ou de l'acide nitrique utilisé à l'étape (a).

13. Procédé de préparation d'un sol aqueux de silice, tel que revendiqué à la revendication 8, dans lequel le silicate de métal alcalin est dissous dans une solution aqueuse ayant une concentration de 0,015 à 15 % en poids d'acide nitrique que l'on utilise à l'étape (a).

14. Procédé de préparation d'un sol aqueux de silice, tel que revendiqué à la revendication 8, dans lequel la solution aqueuse d'hydroxyde de sodium ou de potassium utilisée à l'étape (d) a une concentration de 2 à 20 % en poids de l'hydroxyde.

15. Procédé de préparation d'un sol aqueux de silice, tel que revendiqué à la revendication 8, dans lequel l'ammoniac utilisé à l'étape (g) est ajouté sous forme d'une solution aqueuse d'ammoniaque ayant une concentration de 5 à 30 % de l'ammoniaque.

16. Procédé de préparation d'un sol aqueux stable de silice, qui a une concentration en SiO₂ de 30 à 50 % en poids, qui est essentiellement dépourvu de tous autres oxydes de métaux polyvalents que la silice et dans lequel les particules de la silice colloïdale ont une taille particulaire moyenne de 10 à 30 mµm, le procédé comprenant les étapes (a), (b), (c), (d), (e), (f) et (g) :
(a) une étape dans laquelle on fait passer une solution aqueuse d'un silicate de métal alcalin, ayant une concentration de 1 à 6 % en poids du SiO₂ du silicate et contenant d'autres oxydes de métaux polyvalents que de la silice, en une quantité de 300 à 3000 ppm en poids de silice du silicate, dans une colonne garnie d'une résine échangeuse de cations, sous forme hydrogène, en une quantité suffisante pour réaliser l'échange d'ions de tous les ions de métaux présents dans la solution aqueuse, le passage étant réalisé à une vitesse spatiale de 1 à 10 par heure tout en maintenant pendant tout le passage une température de 0 à 60°C de la solution présente à l'intérieur de la colonne, et l'on ajoute ensuite à l'effluent sortant de la colonne une quantité de 100 à 10 000 ppm en poids d'un acide fort,
(b) une étape dans laquelle on fait passer une solution aqueuse contenant l'acide fort, obtenue à l'étape (a), dans une colonne garnie d'une résine échangeuse de cations sous forme hydrogène, en une quantité suffisante pour réaliser l'échange des ions de tous les ions de métaux présents dans la solution aqueuse, l'addition étant réalisée à une vitesse spatiale de 0,1 à 10 par heure tout en maintenant pendant tout le passage une température de 0 à 60°C de la solution présente à l'intérieur de la colonne,
(c) une étape dans laquelle on fait passer la solution aqueuse obtenue à l'étape (b) dans une colonne garnie d'une résine échangeuse d'anions, sous forme hydroxyle, en une quantité suffisante pour réaliser l'échange d'ions de tous les anions présents dans la solution aqueuse, l'addition étant réalisée à une vitesse spatiale de 1 à 10 par heure, tout en maintenant pendant tout le passage une température de 0 à 60°C de la solution présente à l'intérieur de la colonne,
(d) une étape dans laquelle on ajoute une solution aqueuse d'hydroxyde de sodium ou de potassium à la solution aqueuse obtenue à l'étape (c), selon un rapport molaire de 1 mol de Na₂O ou de K₂O présent dans la solution aqueuse de l'hydroxyde pour 60 à 200 mol de SiO₂ contenu dans la solution aqueuse obtenue à l'étape (c), tout en maintenant pendant toute l'addition une température de 0 à 60°C de la solution résultante,
(e) une étape dans laquelle on introduit continuellement de 5 à 40 parties en poids de la solution obtenue à l'étape (d) dans 1 partie en poids de la solution obtenue à l'étape (d), dans un récipient, pendant une période de 50 à 200 par heure tout en maintenant une température de 70 à 100°C du liquide, sous pression normale ou réduite, dans le récipient afin d'évaporer l'eau du liquide et enlever du récipient l'eau ainsi évaporée, de sorte que le volume du liquide présent dans le récipient puisse être constant pendant toute l'alimentation, de façon à former un sol aqueux stable de silice colloïdale ayant une taille particulaire moyenne de 10 à 30 mµm, ayant une concentration de SiO₂ de 30 à 50 % en poids,
(f) une étape dans laquelle on fait passer le sol obtenu à l'étape (e) dans une colonne garnie d'une résine échangeuse de cations sous forme hydrogène, en une quantité suffisante pour réaliser l'échange d'ions de tous les ions de métaux présents dans le sol, à une vitesse spatiale de 2 à 20 par heure, tout en maintenant pendant tout le passage une température de 0 à 60°C du sol présent à l'intérieur de la colonne,
(g) une étape dans laquelle on ajoute de l'ammoniaque au sol obtenu à l'étape (f), l'addition étant réalisée en une quantité permettant de conférer au sol une valeur de pH de 8 à 10,5, à une température de 0 à 100°C du sol.

17. Procédé de préparation d'un sol aqueux de silice, tel que revendiqué à la revendication 16, dans lequel le silicate de métal alcalin utilisé à l'étape (a) est un "verre sodique à l'eau" (silicate de sodium) ayant un rapport molaire SiO₂/Na₂O de 2 à 4.

18. Procédé de préparation d'un sol aqueux de silice, tel que revendiqué à la revendication 16, dans lequel l'acide fort utilisé à l'étape (a) est de l'acide sulfurique, nitrique, chlorhydrique, sulfamique ou formique.

19. Procédé de préparation d'un sol aqueux de silice, tel que revendiqué à la revendication 16, dans lequel l'acide fort utilisé à l'étape (a) est une solution aqueuse ayant une concentration de 10 à 100 % en poids d'acide sulfurique, nitrique ou chlorhydrique.

20. Procédé de préparation d'un sol aqueux de silice, tel que revendiqué à la revendication 16, dans lequel l'acide fort utilisé à l'étape (a) est une solution aqueuse ayant une concentration de 10 à 100 % en poids d'acide nitrique.

21. Procédé de préparation d'un sol aqueux de silice, tel que revendiqué à la revendication 16, dans lequel la solution aqueuse d'hydroxyde de sodium ou de potassium utilisée à l'étape (d) a une concentration de 2 à 20 % en poids de l'hydroxyde.

22. Procédé de préparation d'un sol aqueux de silice, tel que revendiqué à la revendication 16, dans lequel l'ammoniac utilisé à l'étape (g) est ajouté sous forme d'une solution aqueuse d'ammoniaque ayant une concentration de 5 à 30 % en poids d'ammoniaque.

23. Procédé de préparation d'une solution aqueuse d'acide silicique actif ayant une concentration en SiO₂ de 1 à 6 % en poids et qui est essentiellement dépourvu de tous autres oxydes de métaux polyvalents que la silice, le procédé comprenant les étapes (a), (b) et (c) :
(a) une étape dans laquelle on prépare une solution aqueuse d'un silicate de métal alcalin, ayant une concentration de 1 à 6 % en poids de SiO₂ du silicate et ayant une concentration de 150 à 15 000 ppm en poids d'un sel d'un acide fort, en dissolvant dans de l'eau un sel d'un acide fort et un silicate de métal alcalin, contenant d'autres oxydes de métaux polyvalents que de la silice, en une quantité de 300 à 3 000 ppm en poids par rapport à la silice du silicate,
(b) une étape dans laquelle on fait passer la solution aqueuse, obtenue à l'étape (a), dans une colonne garnie d'une résine échangeuse de cations, sous forme hydrogène, le passage étant réalisé en une quantité suffisante pour réaliser l'échange d'ions de tous les ions de métaux de la solution aqueuse, ce passage étant effectué à une vitesse spatiale de 0,1 à 10 par heure, tout en maintenant pendant tout le passage une température de 0 à 60°C de la solution présente à l'intérieur de la colonne, et
(c) une étape dans laquelle on fait passer la solution aqueuse, obtenue à l'étape (b), dans une colonne garnie d'une résine échangeuse d'anions, sous forme hydroxyle, le passage étant réalisé en une quantité suffisante pour obtenir l'échange d'ions de tous les anions présents dans la solution aqueuse, à une vitesse spatiale de 1 à 10 par heure tout en maintenant pendant tout le passage une température de 0 à 60°C de la solution présente à l'intérieur de la colonne.

24. Procédé de préparation d'une solution aqueuse d'acide silicique actif, tel que revendiqué à la revendication 23, dans lequel le silicate de métal alcalin que l'on utilise à l'étape (a) est un "verre sodique à l'eau" (silicate de sodium) ayant un rapport molaire SiO₂/Na₂O de 2 à 4.

25. Procédé de préparation d'une solution aqueuse d'acide silicique actif, tel que revendiqué à la revendication 23, dans lequel le sel d'un acide fort utilisé à l'étape (a) est du sulfate, du nitrate, du chlorhydrate ou du chlorure, du sulfamate ou du formiate de Na, de K, de Li, de Cs, de NH₄, d'un ammonium quaternaire ou d'une amine.

26. Procédé de préparation d'une solution aqueuse d'acide silicique actif, tel que revendiqué à la revendication 23, dans lequel le silicate de métal alcalin est dissous dans une solution aqueuse d'un sel d'un acide fort de façon à obtenir la solution aqueuse du silicate de métal alcalin de l'étape (a).

27. Procédé de préparation d'une solution aqueuse d'acide silicique actif, tel que revendiqué à la revendication 23, dans lequel le silicate de métal alcalin est dissous dans une solution aqueuse ayant une concentration de 0,02 à 20 % en poids de nitrate de Na, de K, de Li ou de NH₄ utilisé à l'étape (a).

28. Procédé de préparation d'une solution aqueuse d'acide silicique actif, ayant une concentration en SiO₂ de 1 à 6 % en poids et qui est essentiellement dépourvu de tous autres oxydes de métaux polyvalents que la silice, le procédé comprenant les étapes (a), (b) et (c) :
(a) une étape dans laquelle on prépare une solution aqueuse d'un silicate de métal alcalin, ayant une concentration de 1 à 6 % en poids de SiO₂ du silicate et ayant une concentration de 150 à 15 000 ppm en poids d'un sel d'un acide fort, en dissolvant dans de l'eau un acide fort et un silicate de métal alcalin contenant d'autres oxydes de métaux polyvalents que de la silice, en une quantité de 300 à 3 000 ppm en poids par rapport à la silice du silicate,
(b) une étape dans laquelle on fait passer la solution aqueuse obtenue à l'étape (a) dans une colonne garnie d'une résine échangeuse de cations, sous forme hydrogène, en une quantité suffisante pour réaliser l'échange d'ions de tous les ions de métaux présents dans la solution aqueuse, à une vitesse spatiale de 0,1 à 10 par heure, tout en maintenant pendant tout le passage une température de 0 à 60°C de la solution présente à l'intérieur de la colonne, et
(c) une étape dans laquelle on fait passer la solution aqueuse obtenue à l'étape (b) dans une colonne garnie d'une résine échangeuse d'ions, sous forme hydroxyle, en une quantité suffisante pour réaliser l'échange d'ions de tous les anions présents dans la solution aqueuse, à une vitesse spatiale de 1 à 10 par heure, tout en maintenant pendant tout le passage une température de 0 à 60°C de la solution présente à l'intérieur de la colonne.

29. Procédé de préparation d'une solution aqueuse d'acide silicique actif, tel que revendiqué à la revendication 28, dans lequel le silicate de métal alcalin que l'on utilise à l'étape (a) est un "verte sodique à l'eau" (silicate de sodium) ayant un rapport molaire SiO₂/Na₂O de 2 à 4.

30. Procédé de préparation d'une solution aqueuse d'acide silicique actif, tel que revendiqué à la revendication 28, dans lequel l'acide fort utilisé à l'étape (a) est de l'acide sulfurique, nitrique, chlorhydrique, sulfamique ou formique.

31. Procédé de préparation d'une solution aqueuse d'acide silicique actif, tel que revendiqué à la revendication 28, dans lequel le silicate de métal alcalin est dissous dans une solution aqueuse d'un acide fort de manière à obtenir la solution aqueuse du silicate de métal alcalin que l'on utilise à l'étape (a).

32. Procédé de préparation d'une solution aqueuse d'acide silicique actif, tel que revendiqué à la revendication 28, dans lequel l'acide fort utilisé à l'étape (a) est une solution aqueuse ayant une concentration de 0,015 à 15 % en poids d'acide sulfurique, nitrique ou chlorhydrique.

33. Procédé de préparation d'une solution aqueuse d'acide silicique actif, tel que revendiqué à la revendication 28, dans lequel l'acide fort utilisé à l'étape (a) est une solution aqueuse ayant une concentration de 0,015 à 15 % en poids d'acide nitrique.

34. Procédé de préparation d'une solution aqueuse d'acide silicique actif, ayant une concentration en SiO₂ de 1 à 6 % en poids et qui est essentiellement dépourvu de tous autres oxydes de métaux polyvalents que la silice, le procédé comprenant les étapes (a), (b) et (c) :
(a) une étape dans laquelle on fait passer une solution aqueuse d'un silicate de métal alcalin, ayant une concentration de 1 à 6 % en poids de SiO₂ du silicate et contenant en une quantité de 300 à 3 000 ppm en poids, par rapport à la silice du silicate, d'autres oxydes de métaux polyvalents que de la silice, dans une colonne garnie d'une résine échangeuse de cations, sous forme hydrogène, le passage étant réalisé en une quantité suffisante pour soumettre à échange d'ions tous les ions de métaux présents dans la solution aqueuse, le passage étant réalisé à une vitesse spatiale de 1 à 10 par heure, tout en maintenant pendant tout le passage une température de 0 à 60°C de la solution contenue à l'intérieur de la colonne puis l'on ajoute un acide fort, en une quantité de 100 à 10 000 ppm en poids, à l'effluent sortant de la colonne,
(b) une étape dans laquelle on fait passer une solution aqueuse contenant l'acide fort obtenu à l'étape (a) dans une colonne garnie d'une résine échangeuse de cations, sous forme hydrogène, en une quantité suffisante pour soumettre à échange d'ions tous les ions de métaux présents dans la solution aqueuse, le passage étant réalisé à une vitesse spatiale de 0,1 à 10 par heure, tout en maintenant pendant tout le passage une température de 0 à 60°C de la solution présente à l'intérieur de la colonne, et
(c) une étape dans laquelle on fait passer la solution aqueuse obtenue à l'étape (b) dans une colonne garnie d'une résine échangeuse d'anions, sous forme hydroxyle, le passage étant réalisé en une quantité suffisante pour soumettre à échange d'ions tous les anions présents dans la solution aqueuse, à une vitesse spatiale de 1 à 10 par heure, tout en maintenant pendant tout le passage une température de 0 à 60°C de la solution présente à l'intérieur de la colonne.

35. Procédé de préparation d'une solution aqueuse d'acide silicique actif, tel que revendiqué à la revendication 34, dans lequel le silicate de métal alcalin utilisé à l'étape (a) est un "verre sodique à l'eau" (silicate de sodium) ayant un rapport molaire SiO₂/Na₂O de 2 à 4.

36. Procédé de préparation d'une solution aqueuse d'acide silicique actif, tel que revendiqué à la revendication 34, dans lequel l'acide fort utilisé à l'étape (a) est de l'acide sulfurique, nitrique, chlorhydrique, sulfamique ou formique.

37. Procédé de préparation d'une solution aqueuse d'acide silicique actif, tel que revendiqué à la revendication 34, dans lequel l'acide fort utilisé à l'étape (a) est une solution aqueuse ayant une concentration de 10 à 100 % en poids d'acide sulfurique, nitrique ou chlorhydrique.

38. Procédé de préparation d'une solution aqueuse d'acide silicique actif, tel que revendiqué à la revendication 34, dans lequel l'acide fort utilisé à l'étape (a) est une solution aqueuse ayant une concentration de 10 à 100 % en poids d'acide nitrique.

39. Procédé de préparation d'un sol aqueux stable de silice, ayant une concentration en SiO₂ de 30 à 50 % en poids, qui est essentiellement dépourvu de tous autres oxydes de métaux polyvalents que la silice et dans lequel les particules de silice colloïdale ont une taille particulaire moyenne de 10 à 30 mµm, le procédé comprenant les étapes (1), (2), (3), (4), (5), (6) et (7) :
(1) une étape dans laquelle la solution aqueuse d'un silicate de métal alcalin, ayant une concentration de 1 à 6 % en poids de SiO₂ du silicate et ayant une concentration de 150 à 750 ppm en poids d'un sel d'un acide fort est préparée par dissolution, dans l'eau, d'un sel d'un acide fort et d'un silicate de métal alcalin contenant des oxydes de métaux polyvalents autres que la silice, présents en une quantité de 300 à 1 500 ppm en poids par rapport à la silice du silicate,
(2) une étape dans laquelle on fait passer la solution aqueuse, obtenue à l'étape (1), dans une colonne garnie d'une résine échangeuse de cations, sous forme hydrogène, le passage étant effectué en une quantité suffisante pour assurer l'échange d'ions de tous les ions de métaux présents dans la solution aqueuse, à une vitesse spatiale de 0,1 à 10 par heure, tout en maintenant pendant tout le passage une température de 0 à 60°C de la solution présente à l'intérieur de la colonne,
(3) une étape dans laquelle on ajoute une solution aqueuse d'hydroxyde de sodium ou de potassium à la solution aqueuse obtenue à l'étape (2), selon un rapport molaire de 1 mol de Na₂O ou de K₂O dans la solution aqueuse de l'hydroxyde pour 60 à 200 mol de SiO₂ contenu dans la solution aqueuse obtenue à l'étape (2), tout en maintenant pendant toute l'addition une température de 0 à 60°C de la solution résultante,
(4) une étape dans laquelle on introduit en continu 5 à 20 parties en poids de la solution obtenue à l'étape (3) dans un récipient, pendant une période de 50 à 200 h, tout en maintenant une température de 70 à 100°C du liquide, sous pression normale ou réduite dans le récipient, pour évaporer l'eau du liquide et enlever du récipient l'eau évaporée, de sorte que le volume du liquide présent dans le récipient peut être constant pendant toute l'alimentation, de façon à former un sol aqueux stable de silice colloïdale ayant une taille particulaire moyenne de 10 à 30 mµm et ayant une concentration en SiO₂ de 30 à 50 % en poids,
(5) une étape dans laquelle on fait passer le sol, obtenu à l'étape (4), dans une colonne garnie d'une résine échangeuse de cations, sous forme hydrogène, le passage étant réalisé en une quantité suffisante pour assurer l'échange d'ions de tous les ions de métaux du sol à une vitesse spatiale de 2 à 20 par heure tout en maintenant pendant tout le passage une température de 0 à 60°C du sol à l'intérieur de la colonne,
(6) une étape dans laquelle on fait passer le sol obtenu à l'étape (5) dans une colonne garnie d'une résine échangeuse d'anions sous forme hydroxyle, le passage étant réalisé en une quantité suffisante pour garantir l'échange des ions de tous les anions présents dans le sol, à une vitesse spatiale de 1 à 10 par heure tout en maintenant pendant tout le passage une température de 0 à 60°C du sol présent dans la colonne,
(7) une étape dans laquelle on ajoute de l'ammoniac au sol obtenu à l'étape (6), l'addition étant réalisée en une quantité permettant de donner au sol une valeur de pH de 8 à 10,5, à une température de 0 à 100°C du sol.

40. Procédé de préparation d'un sol aqueux de silice selon la revendication 39, dans lequel le silicate de métal alcalin servant à l'étape (1) est un "verre sodique à l'eau" (silicate de sodium) présentant un rapport molaire SiO₂/Na₂O de 2 à 4.

41. Procédé de préparation d'un sol aqueux de silice, tel que revendiqué à la revendication 39, dans lequel le sel d'acide fort utilisé à l'étape (1) est du sulfate, du nitrate, du chlorure ou du chlorhydrate, du sulfamate ou du formiate de Na, K, Li, Cs, NH₄, d'un ammonium quaternaire ou d'une amine.

42. Procédé de préparation d'un sol aqueux de silice, tel que revendiqué à la revendication 39, dans lequel on dissout le silicate de métal alcalin dans une solution aqueuse d'un sel d'acide fort de manière à obtenir la solution aqueuse du sel de métal alcalin utilisé à l'étape (1).

43. Procédé de préparation d'un sol aqueux de silice, tel que revendiqué à la revendication 39, dans lequel on dissout le silicate de métal alcalin dans une solution aqueuse ayant une concentration de 0,02 à 20 % en poids de nitrate de Na, de K, de Li ou de NH₄, utilisé à l'étape (1).

44. Procédé de préparation d'un sol aqueux de silice, tel que revendiqué à la revendication 39, dans lequel la solution aqueuse d'hydroxyde de sodium ou de potassium que l'on utilise à l'étape (3) possède une concentration d'hydroxyde de 2 à 20 % en poids.

45. Procédé de préparation d'un sol aqueux de silice, tel que revendiqué à la revendication 39, dans lequel l'ammoniac utilisé à l'étape (7) est ajouté sous forme d'une solution aqueuse d'ammoniaque ayant une concentration de 5 à 30 % en poids d'ammoniaque.

46. Procédé de préparation d'un sol aqueux stable de silice ayant une concentration de SiO₂ de 30 à 50 % en poids, qui est essentiellement dépourvu de tous autres oxydes de métaux polyvalents que la silice et dans lequel les particules de silice colloïdale ont une taille particulaire moyenne de 10 à 30 mµm, le procédé comprenant les étapes (1), (2), (3), (4), (5), (6) et (7) :
(1) une étape dans laquelle on prépare une solution aqueuse d'un silicate de métal alcalin, ayant une concentration de 1 à 6 % en poids de SiO₂ du silicate et comportant une concentration de 100 à 500 ppm en poids d'un acide fort, en dissolvant dans de l'eau un acide fort et un silicate de métal alcalin contenant des oxydes de métaux polyvalents autres que la silice, présents en une quantité de 300 à 1 500 ppm en poids par rapport à la silice du silicate,
(2) une étape dans laquelle on fait passer la solution aqueuse, obtenue à l'étape (1), dans une colonne garnie d'une résine échangeuse de cations, sous forme hydrogène, le passage étant réalisé en une quantité suffisante pour assurer l'échange d'ions de tous les ions de métaux présents dans la solution aqueuse, à une vitesse spatiale de 0,1 à 10 par heure, tout en maintenant pendant tout le passage une température de 0 à 60°C de la solution présente à l'intérieur de la colonne,
(3) une étape dans laquelle on ajoute une solution aqueuse d'hydroxyde de sodium ou de potassium à la solution aqueuse obtenue à l'étape (2), selon un rapport molaire de 1 mol de Na₂O ou de K₂O dans la solution aqueuse de l'hydroxyde pour 60 à 200 mol de SiO₂ contenu dans la solution aqueuse obtenue à l'étape (2), tout en maintenant pendant toute l'addition une température de 0 à 60°C de la solution résultante,
(4) une étape dans laquelle on introduit continuellement de 5 à 20 parties en poids de la solution obtenue à l'étape (3) dans 1 partie en poids de la solution obtenue à l'étape (3), dans un récipient, pendant une période de 50 à 200 h, tout en maintenant une température de 70 à 100°C du liquide, sous pression normale ou réduite dans le récipient, pour évaporer l'eau du liquide et enlever du récipient l'eau évaporée, de sorte que le volume du liquide puisse rester constant dans le récipient pendant toute l'alimentation, de façon à former un sol aqueux stable de silice colloïdale ayant une taille particulaire moyenne de 10 à 30 mµm, en une concentration en SiO₂ de 30 à 50 % en poids,
(5) une étape dans laquelle on fait passer le sol, obtenu à l'étape (4), dans une colonne garnie d'une résine échangeuse de cations, sous forme hydrogénée, le passage étant réalisé en une quantité suffisante pour soumettre à échange d'ions tous les ions de métaux présents dans le sol à une vitesse spatiale de 2 à 20 par heure tout en maintenant pendant tout le passage une température de 0 à 60°C du sol à l'intérieur de la colonne,
(6) une étape dans laquelle on fait passer le sol obtenu à l'étape (5) dans une colonne garnie d'une résine échangeuse d'anions sous forme hydroxyle, en une quantité suffisante pour soumettre à échange d'ions les anions du sol, à une vitesse spatiale de 1 à 10 par heure, tout en maintenant pendant tout le passage une température de 0 à 60°C du sol présent dans la colonne,
(7) une étape dans laquelle on ajoute de l'ammoniaque au sol obtenu à l'étape (6), en une quantité permettant de doter le sol d'une valeur de pH de 8 à 10,5, à une température de 0 à 100°C du sol.

47. Procédé de préparation d'un sol aqueux de silice selon la revendication 46, dans lequel le silicate de métal alcalin utilisé à l'étape (1) est un "verre sodique à l'eau" (silicate de sodium) ayant un rapport molaire SiO₂/Na₂O de 2 à 4.

48. Procédé de préparation d'un sol aqueux de silice, tel que revendiqué à la revendication 46, dans lequel l'acide fort utilisé à l'étape (1) est l'acide sulfurique, nitrique, chlorhydrique, sulfamique ou formique.

49. Procédé de préparation d'un sol aqueux de silice, tel que revendiqué à la revendication 46, dans lequel on dissout le silicate de métal alcalin dans une solution aqueuse de l'acide fort de manière à obtenir une solution aqueuse du silicate dans l'étape (1).

50. Procédé de préparation d'un sol aqueux de silice, tel que revendiqué à la revendication 46, dans lequel on dissout le silicate de métal alcalin dans une solution aqueuse ayant une concentration de 0,015 à 15 % en poids d'acide sulfurique, chlorhydrique ou nitrique à l'étape (1).

51. Procédé de préparation d'un sol aqueuse de silice, tel que revendiqué à la revendication 46, dans lequel on dissout le silicate de métal alcalin dans une solution aqueuse ayant une concentration de 0,015 à 15 % en poids d'acide nitrique à l'étape (1).

52. Procédé de préparation d'un sol aqueux de silice, tel que revendiqué à la revendication 46, dans lequel la solution aqueuse d'hydroxyde de sodium ou de potassium que l'on utilise à l'étape (3) a une concentration de 2 à 20 % en poids de l'hydroxyde.

53. Procédé de préparation d'un sol aqueux de silice, tel que revendiqué à la revendication 46, dans lequel, à l'étape (7), on ajoute l'ammoniac sous forme d'une solution aqueuse d'ammoniaque ayant une concentration de 5 à 30 % en poids d'ammoniaque.

54. Procédé de préparation d'un sol aqueux stable de silice, ayant une concentration en SiO₂ de 30 à 50 % en poids, qui est essentiellement dépourvu de tous autres oxydes de métaux polyvalents que la silice, et dans lequel les particules de silice colloïdale ont une taille particulaire moyenne de 10 à 30 mµm, le procédé comprenant les étapes (1), (2), (3), (4), (5), (6) et (7) :
(1) une étape dans laquelle on fait passer une solution aqueuse d'un silicate de métal alcalin, ayant une concentration de 1 à 6 % en poids de SiO₂ du silicate et contenant, en une quantité de 300 à 1 500 ppm en poids par rapport à la silice du silicate, des oxydes de métaux polyvalents autres que la silice, dans une colonne garnie d'une résine échangeuse de cations, sous forme hydrogénée, le passage étant réalisé en une quantité suffisante pour soumettre à échange d'ions tous les ions de métaux présents dans la solution aqueuse, à une vitesse spatiale de 1 à 10 par heure, tout en maintenant pendant tout le passage une température de 0 à 60°C de la solution présente dans la colonne puis l'on ajoute à l'effluent provenant de la colonne un acide fort, l'addition étant réalisée en une quantité de 100 à 500 ppm en poids,
(2) une étape dans laquelle on fait passer une solution aqueuse contenant l'acide fort obtenu à l'étape (1) dans une colonne garnie d'une résine échangeuse de cations sous forme hydrogène, en une quantité suffisante pour soumettre à échange d'ions tous les ions de métaux de la solution aqueuse, à une vitesse spatiale de 0,1 à 10 par heure, tout en maintenant pendant tout le passage une température de 0 à 60°C de la solution présente dans la colonne,
(3) une étape dans laquelle on ajoute une solution aqueuse d'hydroxyde de sodium ou de potassium à la solution aqueuse obtenue à l'étape (2), l'addition étant réalisée en un rapport molaire de 1 mol de Na₂O ou de K₂O de la solution aqueuse de l'hydroxyde pour 60 à 200 mol de SiO₂ contenu dans la solution aqueuse obtenue à l'étape (2), tout en maintenant pendant toute l'addition une température de 0 à 60°C de la solution obtenue,
(4) une étape dans laquelle on introduit continuellement de 5 à 20 parties en poids de la solution obtenue à l'étape (3) dans 1 partie en poids de la solution obtenue à l'étape (3), dans un récipient, pendant une période de 50 à 200 h, tout en maintenant une température de 70 à 100°C du liquide, sous pression normale ou réduite dans le récipient, afin d'évaporer l'eau du liquide et enlever du récipient l'eau évaporée, de sorte que le volume du liquide présent dans le récipient puisse rester constant pendant toute l'alimentation, de façon à former un sol aqueux stable de silice colloïdale ayant une taille particulaire moyenne de 10 à 30 mµm, et ayant une concentration en SiO₂ de 30 à 50 % en poids,
(5) une étape dans laquelle on fait passer le sol, obtenu à l'étape (4), dans une colonne garnie d'une résine échangeuse de cations, sous forme hydrogène, le passage étant réalisé en une quantité suffisante pour soumettre à échange d'ions tous les ions de métaux du sol à une vitesse spatiale de 2 à 20 par heure tout en maintenant pendant tout le passage une température de 0 à 60°C du sol contenu dans la colonne,
(6) une étape dans laquelle on fait passer le sol obtenu à l'étape (5) dans une colonne garnie d'une résine échangeuse d'anions sous forme hydroxyle, en une quantité suffisante pour soumettre à échange d'ions la totalité des ions du sol, à une vitesse spatiale de 1 à 10 par heure, tout en maintenant pendant tout le passage une température de 0 à 60°C du sol contenu dans la colonne,
(7) une étape dans laquelle on ajoute de l'ammoniaque au sol obtenu à l'étape (6), en une quantité permettant de doter le sol d'une valeur de pH de 8 à 10,5, à une température de 0 à 100°C du sol.

55. Procédé de préparation d'un sol aqueux de silice, tel que revendiqué à la revendication 54, dans lequel le silicate de métal alcalin utilisé à l'étape (1) est un "verre sodique à l'eau" ayant un rapport molaire SiO₂/Na₂O de 2 à 4.

56. Procédé de préparation d'un sol aqueux de silice, tel que revendiqué à la revendication 54, dans lequel l'acide fort utilisé à l'étape (1) est l'acide sulfurique, nitrique, chlorhydrique, sulfamique ou formique.

57. Procédé de préparation d'un sol aqueux de silice, tel que revendiqué à la revendication 54, dans lequel l'acide fort utilisé à l'étape (1) est une solution aqueuse ayant une concentration de 10 à 100 % en poids d'acide sulfurique, nitrique ou chlorhydrique.

58. Procédé de préparation d'un sol aqueux de silice, tel que revendiqué à la revendication 54, dans lequel l'acide fort utilisé à l'étape (1) est une solution aqueuse ayant une concentration de 10 à 100 % en poids d'acide nitrique.

59. Procédé de préparation d'un sol aqueux de silice, tel que revendiqué à la revendication 54, dans lequel la solution aqueuse d'hydroxyde de sodium ou de potassium utilisée à l'étape (3) a une concentration de 2 à 20 % en poids de l'hydroxyde.

60. Procédé de préparation d'un sol aqueux de silice, tel que revendiqué à la revendication 54, dans lequel l'ammoniac utilisé dans l'étape (7) est ajouté sous forme d'une solution aqueuse d'ammoniaque ayant une concentration de 5 à 30 % en poids d'ammoniaque.
